(19) Europäisches Patentamt
European Patent Office
Office européen des brevets

(11) **EP 3 230 080 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **15812954.4**

(22) Anmeldetag: **02.12.2015**

(51) Int Cl.:
**B42D 25/324** (2014.01)   **B42D 25/342** (2014.01)

(86) Internationale Anmeldenummer:
**PCT/EP2015/002417**

(87) Internationale Veröffentlichungsnummer:
**WO 2016/020066 (11.02.2016 Gazette 2016/06)**

(54) **OPTISCH VARIABLES SICHERHEITSELEMENT**

OPTICALLY VARIABLE SECURITY ELEMENT

ÉLÉMENT DE SÉCURITÉ OPTIQUEMENT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2014 DE 102014018512**

(43) Veröffentlichungstag der Anmeldung:
**18.10.2017 Patentblatt 2017/42**

(60) Teilanmeldung:
**19000427.5**

(73) Patentinhaber: **Giesecke+Devrient Currency Technology GmbH**
**81677 München (DE)**

(72) Erfinder:
- **FUHSE, Christian**
  **83624 Otterfing (DE)**
- **HEINE, Astrid**
  **85551 Kirchheim (DE)**
- **IMHOF, Martin**
  **81927 München (DE)**
- **KECK-ANGERER, Angelika**
  **80797 München (DE)**
- **DÖRFLER, Walter**
  **81373 München (DE)**
- **FRANZ, Peter**
  **85567 Pienzenau/Bruck (DE)**

(56) Entgegenhaltungen:
EP-A1- 0 581 414       EP-A1- 2 562 726
WO-A1-2009/139396

EP 3 230 080 B1

**Beschreibung**

Die Erfindung betrifft ein optisch variables Sicherheitselement zur Absicherung von Wertgegenständen, mit einem Substrat mit gegenüberliegenden ersten und zweiten Hauptflächen und einer auf der ersten Hauptfläche angeordneten optisch variablen Struktur, die eine Prägestruktur und eine Beschichtung aufweist. Die Erfindung betrifft auch ein Verfahren zur Herstellung eines solchen Sicherheitselements sowie einen entsprechend ausgestatteten Datenträger.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

Neben Kippbildern sind im Stand der Technik auch andere Sicherheitselemente bekannt, die einem Betrachter richtungsabhängig unterschiedliche Darstellungen dadurch darbieten, dass entsprechende Mikrobildelemente mit Hilfe von Mikrolinsen vergrößert werden. Beispiele solcher Sicherheitselemente sind sogenannte Moire-Vergrößerungsanordnungen und andere mikrooptische Darstellungsanordnungen. Da bei diesen Sicherheitselementen neben einem Raster aus Mikrobildern auch ein passergenau ausgerichtetes Raster aus Mikrolinsen, Hohlspiegeln oder Lochmasken erzeugt werden muss, stellen derartige mikrooptische Darstellungsanordnungen erhebliche technologische Anforderungen an den Herstellungsprozess und lassen sich nicht für alle Arten von Wertgegenständen wirtschaftlich einsetzen, oder mit anderen Sicherheitsmerkmalen kombinieren.

Datenträger mit einer optisch variablen Struktur sind auch aus der Druckschrift EP 2 562 726 A2 bekannt. Die beschriebenen Datenträger bestehen aus einer Beschichtung in Form eines gedruckten Linienrasters und aus einem dreidimensionalen Linienraster, das zumindest teilweise auf der Beschichtung angeordnet bzw. der Beschichtung überlagert ist. Die Breite der Linien und der Abstand zwischen den Linien des gedruckten und des dreidimensionalen Rasters sowie die gegenseitige Ausrichtung der Raster werden so ausgewählt, dass ein Moire-Bild erzeugt wird.

Ausgehend davon liegt der Erfindung die Aufgabe zugrunde, ein optisch variables Sicherheitselement der eingangs genannten Art anzugeben, das die Nachteile des Stands der Technik vermeidet, und insbesondere, ein einfach und kostengünstig herzustellendes Sicherheitselement zu schaffen, das beim Kippen visuell ansprechende Bewegungseffekte zeigt und das idealerweise gut mit anderen Sicherheitsmerkmalen eines Datenträger kombinierbar ist.

Diese Aufgabe wird durch die Merkmale der unabhängigen Ansprüche gelöst. Weiterbildungen der Erfindung sind Gegenstand der abhängigen Ansprüche.

Gemäß der Erfindung ist ein Sicherheitselement nach Anspruch 1 vorgesehen.

Im Rahmen der vorliegenden Beschreibung wird der Einfachheit halber statt "das zumindest eine Linienraster" oft nur "das Linienraster" angesprochen. Es versteht sich, dass hierdurch nicht ausgeschlossen werden soll, dass die Beschichtung mehr als ein Linienraster aufweist. Die gemachten Aussagen gelten dann jeweils für mindestens eines, typischerweise aber sogar für alle Linienraster der Beschichtung. Insbesondere sind im Fall mehrerer Linienraster die Beschichtung und die Prägestruktur so kombiniert, dass für mindestens eines, vorzugsweise jedoch für alle Linienraster im Wesentlichen auf jedem Prägeelement zumindest ein Liniensegment einer Linie des Linienrasters liegt. Genauso variiert zumindest einer der genannten Parameter über die Ausdehnung der optisch variablen Struktur ortsabhängig so, dass durch mindestens eines, vorzugsweise jedoch alle Linienraster beim Kippen des Sicherheitselements ein Bewegungseffekt entsteht. Gleiches gilt auch für die weiter unter beschriebenen Ausgestaltungen mit zumindest einem weiteren Linienraster unterhalb der Hintergrundschicht oder mit einer zweiten Beschichtung mit zumindest einem aufgedruckten Linienraster. Auch hier wird abkürzend nur von "dem" Linienraster gesprochen, auch wenn mehrere oder alle Linienraster gemeint sind.

Das Linienraster kann auf die kontrastierende Hintergrundschicht aufgedruckt sein, die in diesem Fall vorzugsweise im Bereich der optisch variablen Struktur vollflächig aufgebracht ist. Alternativ kann das Linienraster zuerst aufgedruckt und die kontrastierende Hintergrundschicht dann mit entsprechenden Aussparungen aufgebracht werden oder das Linienraster kann nach dem Aufbringen der kontrastierenden Hintergrundschicht durch deren bereichsweise Entfernung freigelegt werden und dadurch den Blick auf das Linienraster freigeben. Die Hintergrundschicht und das Linienraster können auch Stoß-an-Stoß nebeneinander aufgebracht sein. In allen Fällen bildet die Hintergrundschicht einen visuellen Hintergrund für den durch das Linienraster erzeugten Bewegungseffekt.

Die kontrastierende Hintergrundschicht ist durch eine hochreflektierende Hintergrundschicht, insbesondere durch eine silbrig, gold- oder kupferfarben glänzende Folie oder eine metallisch wirkende Druckschicht, beispielsweise eine silber-, gold- oder kupferfarbene Druckschicht gebildet, es kommen aber auch metallisierte, insbesondere metallische bedampfte Folienstreifen oder Patches als Hintergrundschicht in Betracht. Als metallisches Beschichtungsmaterial kann insbesondere Aluminium verwendet werden. Optional können die metallisch wirkende Druckschicht und die aufgedampfte Metallschicht auf einer Haftvermittlungsschicht, beispielsweise einer im Siebdruck aufgebrachten glänzenden Haftvermittlungsschicht (Primer) vorgesehen sein. Die silber-, gold- oder kupferfarbene Druckschicht kann insbesondere im Siebdruck oder Flexodruck oder auch als Offsetfarbe aufgebracht sein.

Die beschriebenen Effekte sind besonders gut sichtbar, wenn eine gerichtet reflektierende Hintergrundschicht mit hohem Glanzwert eingesetzt wird.

Durch die hochreflektierende Hintergrundschicht wirkt vorteilhaft jedes Prägeelement als kleiner Hohl- oder Wölbspiegel. In Bezug auf die sich ergebende Bewegungsrichtung beim Kippen des Sicherheitselements weisen Hohl- und Wölbspiegel eine umgekehrte Wirkung auf.

In anderen, ebenfalls erfindungsgemäßen Ausgestaltungen ist die kontrastierende Hintergrundschicht durch eine glänzende Hintergrundschicht, wie beispielsweise eine im Siebdruck aufgebrachte glänzende Haftvermittlungsschicht mit oder ohne Pigmente(n) oder Füllstoffe(n) gebildet. Ist die kontrastierende Hintergrundschicht keine hochreflektierende Schicht, wird das Linienraster mit Vorteil mit hoher Flächendichte aufgedruckt.

Das Substrat kann im Bereich der auf der ersten Hauptfläche angeordneten optisch variablen Struktur opak oder auch transparent oder zumindest transluzent sein. Ist das Substrat dort transparent oder transluzent, so kann die optisch variable Struktur sowohl von der ersten Hauptfläche als auch von der zweiten Hauptfläche her betrachtet werden. Das Sicherheitselement weist dann mit Vorteil eine zweiseitige Gestaltung auf, bei der bei Betrachtung von gegenüberliegenden Seiten jeweils ein Bewegungseffekt sichtbar wird. Dabei kann es sich um denselben Bewegungseffekt, gegebenenfalls mit andersfarbigem Erscheinungsbild, aber auch um verschiedenartige Bewegungseffekte handeln, beispielsweise um einen Kippeffekt bei Betrachtung von der ersten Hauptfläche und einen Rotationseffekt bei Betrachtung von der zweiten Hauptfläche.

Ein transparenter oder transluzenter Bereich in dem Substrat kann beispielsweise durch einen transparenten Polymerbereich in einem ansonsten opaken Polymersubstrat gebildet sein, durch ein Hybridsubstrat mit einem transparenten Hybridfenster, durch ein transparentes Polymersubstrat mit partiellen opaken Farbannahmeschichten oder durch eine durchgehende Öffnung in einem beliebigen Substrat, insbesondere einem Papiersubstrat, die mit einem transparenten, bedruckbaren Folienstreifen oder Patch abgedeckt ist.

Ist das Substrat zumindest in dem Bereich der auf der ersten Hauptfläche angeordneten optisch variablen Struktur transparent oder transluzent, so umfasst die Beschichtung in einer vorteilhaften Ausgestaltung zum einen das bereits genannte Linienraster als erstes Linienraster, das in dieser Ausgestaltung auf der Hintergrundschicht angeordnet ist. Zum anderen umfasst die Beschichtung zumindest ein weiteres, unterhalb der Hintergrundschicht angeordnetes und zu der Hintergrundschicht kontrastierendes Linienraster. Dabei liegt im Wesentlichen auf jedem Prägeelement zumindest ein Liniensegment einer Linie des weiteren Linienrasters, und für das weitere Linienraster variiert zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig, so dass durch das weitere Linienraster beim Kippen des Sicherheitselements ein Bewegungseffekt, insbesondere ein Pump- oder Rotationseffekt entsteht.

In dieser Ausgestaltung nutzen die auf der Hintergrundschicht angeordneten Linienraster und die unterhalb der Hintergrundschicht angeordneten Linienraster dieselbe Prägestruktur und dieselbe Hintergrundschicht. Die Hintergrundschicht ist dabei mit Vorteil opak, insbesondere hochreflektierend ausgebildet und enthält zumindest in den Bereichen der aufgebrachten Linienraster keine Aussparungen, um ein Übersprechen der auf gegenüberliegenden Seiten sichtbaren Information zu vermeiden.

Bei einer weiteren Möglichkeit, zweiseitige Gestaltungen zu verwirklichen, ist vorgesehen, dass die auf der ersten Hauptfläche angeordnete optisch variable Struktur mit einer auf der zweiten Hauptfläche des Substrats angeordneten zweiten optisch variablen Struktur kombiniert ist. Die zweite optisch variable Struktur weist eine zweite Prägestruktur und eine zweite Beschichtung auf, wobei

- die zweite Prägestruktur deckungsgleich, aber invers zur ersten Prägestruktur der ersten Hauptfläche ausgebildet ist,
- die zweite Beschichtung zumindest ein aufgedrucktes Linienraster umfasst,
- die zweite Beschichtung und die zweite Prägestruktur so kombiniert sind, dass im Wesentlichen auf jedem Prägeelement der zweiten Prägestruktur zumindest ein Liniensegment einer Linie des Linienrasters der zweiten Beschichtung liegt, und
- für das Linienraster der zweiten Beschichtung zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster der zweiten Beschichtung beim Kippen des Sicherheitselements ein Bewegungseffekt, insbesondere ein Pump- oder Rotationseffekt entsteht.

Vorteilhaft wird dabei die Prägestruktur der zweiten Hauptfläche im selben Produktionsschritt gleichzeitig mit der Prägestruktur der ersten Hauptfläche erzeugt, beispielsweise durch eine Blindprägung mit einem Stichtiefdruck-Aggregat. Beispielsweise kann bei dem Prägeschritt die erste Hauptfläche des Substrats der Prägeplatte zugewandt sein, während die zweite Hauptfläche in Kontakt mit einem Gegendrucktuch steht. Produktionsbedingt werden dann neben den Prägestrukturen auf der ersten Hauptfläche auch auf der zweiten Hauptfläche Deformationen erzeugt, die erfindungsgemäß als rückseitige Prägestrukturen genutzt werden. Die Prägestrukturen der zweiten Hauptfläche werden dabei deckungsgleich und mit gleichem Rapport wie die Prägestrukturen der ersten Hauptfläche erzeugt, sie weisen allerdings eine zu den Prägestrukturen der ersten Hauptfläche inverse Geometrie auf. Dies bedeutet, dass, jeweils bezogen auf die Oberfläche, einer Erhebung auf der ersten Hauptfläche eine Vertiefung auf der zweiten Hauptfläche entspricht und umkehrt. Aufgrund des verwendeten Gegendrucktuchs weisen die Prägestrukturen der zweiten Hauptfläche gegenüber den Prägestrukturen der ersten Hauptfläche in der Regel eine erhöhte Rauigkeit auf.

Die zweite Beschichtung kann dabei nur die genannten Linienraster enthalten und für die Kontrast- bzw. Reflexionswirkung die Hintergrundschicht der ersten optisch variablen Struktur nutzen. Alternativ kann die zweite Beschichtung zusätzlich eine zu dem Linienraster kontrastierende zweite Hintergrundschicht umfassen, die insbesondere hochreflektierend ausgebildet sein kann. Für die Aufbringung und Anordnung der zweiten Hintergrundschicht auf der zweiten Hauptfläche gelten die für die erste Hintergrundschicht gemachten Ausführungen entsprechend. Die erste und zweite Hintergrundschicht können gleich oder verschieden ausgebildet sein.

Um zusätzlich zu dem oder den in Aufsicht erkennbaren Bewegungseffekten eine Durchsichtsinformation in dem Sicherheitselement zu erzeugen, ist die kontrastierende Hintergrundschicht oder, falls zwei Hintergrundschichten vorgesehen sind, zumindest eine der kontrastierenden Hintergrundschichten vorteilhaft mit punkt- oder linienförmigen Aussparungen perforiert oder großflächig ausgespart. In den perforierten oder ausgesparten Bereichen können auch die auf die Hintergrundschicht aufgedruckten Linienraster ausgespart sein. Wie weiter unten genauer beschrieben, können die Linienraster in großflächigen Aussparungen beispielsweise in ihrer Farbe modifiziert sein. Die Aussparungen können insbesondere durch bereichsweises Entfernen einer bereits aufgebrachten Hintergrundschicht durch Laserbeaufschlagung erzeugt werden, oder auch durch lediglich bereichsweises Aufbringen der Hintergrundschicht.

In vorteilhaften Ausgestaltungen sind die Prägeelemente durch erhabene oder vertiefte Rundstrukturen, insbesondere durch gestauchte halbkugelförmige oder asphärische Strukturen oder Kalotten ("Fly's Eye Arrays") gebildet. Die Grundfläche der Prägeelemente ist vorzugweise kreisförmig oder polygonal, insbesondere quadratisch oder sechseckig. Daneben kommen auch pyramidale Formen, insbesondere mit einer hohen Anzahl an Flächen, beispielsweise einer achteckigen Grundfläche, in Betracht. Die Prägestruktur kann auch langgestreckte erhabene oder vertiefte Prägeelemente, beispielsweise in Form elliptischer oder stabförmiger Prägeelemente enthalten. Auch Prägeelemente unterschiedlicher Form können in einer Prägestruktur vorliegen, um die Fälschungssicherheit weiter zu erhöhen. Die Abmessung der Prägeelemente liegt bevorzugt im Bereich von 50 $\mu$m bis 500 $\mu$m, besonders bevorzugt im Bereich von 260 $\mu$m bis 300 $\mu$m, die Strukturhöhe liegt mit Vorteil unterhalb von 200 $\mu$m, bevorzugt unterhalb von 100 $\mu$m, besonders bevorzugt im Bereich von 30 $\mu$m bis 90 $\mu$m. Besteht das Substrat des Sicherheitselements aus einem glatten Trägermaterial, beispielsweise aus einem Polymer, kann die Abmessung der Prägeelemente mit Vorteil auch im Bereich von 50 $\mu$m bis 150 $\mu$m liegen. Die Strukturhöhe liegt in diesem Fall typischerweise unterhalb von 75 $\mu$m, bevorzugt unterhalb von 50 $\mu$m.

Bei langgestreckten Prägeelementen beziehen sich die genannten Größen auf die Abmessung in Querrichtung. In Längsrichtung können die langgestreckten Prägeelemente eine Abmessung von mehreren Millimetern oder sogar mehreren Zentimetern aufweisen. Eine Kombination von sphärischen und langgestreckten Prägeelementen verleiht dem Sicherheitselement zusätzlichen Fälschungsschutz, da kommerziell zwar sphärische Mikrolinsenarrays und Lentikulararrays mit langgestreckten Zylinderlinsen jeweils separat erhältlich sind, aber keine Kombination solcher Gestaltungen.

Die Prägeelemente sind bevorzugt in einem Quadrat-Gitter, Rechteck-Gitter, Rauten-Gitter, Sechseck-Gitter oder Parallelogramm-Gitter angeordnet. Die Rasterweite oder Rasterweiten Wp des Rasters ergeben sich dabei aus der Summe aus der Abmessung der Prägeelemente dp und des Abstands $a_P$ zwischen benachbarten Prägeelementen. Wie erwähnt liegt die Abmessung $d_P$ vorteilhaft zwischen 200 $\mu$m und 500 $\mu$m, die Rasterweite Wp liegt für jede Gitterrichtung vorzugsweise zwischen 1.0* $d_P$ und 1.2* $d_P$ und der Abstand ap ist mit Vorteil kleiner als 2 $\mu$m. Sowohl die Abmessung dp als auch der Abstand ap und damit auch die Rasterweite Wp können konstant oder ortabhängig sein. Besonders bevorzugt sind Raster mit der Symmetrie eines Quadrat-, Rechteck- oder Sechseck-Gitters und mit konstanter Rasterweite Wp, konstanten Abmessungen dp und konstanten Abständen ap. Eine ortsabhängige Rasterweite kann insbesondere durch eine Nebeneinanderanordnung von Teilrastern mit verschiedener, aber innerhalb eines Teilrasters konstanter Rasterweite entstehen. Beispielsweise können sich Teilraster aus sphärischen Prägeelementen mit Teilrastern aus langgestreckten Prägeelementen abwechseln, die schon aufgrund der unterschiedlichen Form der Prägeelemente vorteilhaft unterschiedliche Rasterweiten aufweisen. Insbesondere können die Teilraster aus langgestreckten Prägeelementen auch jeweils nur eindimensional sein, also aus n x 1 parallel zueinander angeordneten Elementen bestehen. Die Teilraster aus langgestreckten Prägeelementen können in vorteilhaften Ausgestaltungen auch in Form eines Musters, von Zeichen oder einer Codierung ausgebildet sein.

Zur weiteren Erhöhung der Fälschungssicherheit kann die Prägestruktur sowohl erhabene als auch vertiefte Prägeelemente enthalten, wobei die erhabenen und vertieften Prägeelemente in Form eines Musters, von Zeichen oder einer Codierung angeordnet sind. Wegen der entgegengesetzten optischen Wirkung von erhabenen und vertieften Prägeelementen wird die von den Prägeelementen gebildete Form zumindest aus bestimmten Betrachtungsrichtungen erkennbar und stellt eine weitere Information innerhalb des Sicherheitselements dar.

Weiter kann vorgesehen sein, dass die Prägestruktur neben dem genannten zweidimensionalen Raster von Prägeelementen zumindest einen Teilbereich mit gegen das zweidimensionale Raster versetzten Prägeelementen umfasst. Der genannte zumindest eine Teilbereich ist vorteilhaft in Form eines Musters, von Zeichen oder einer Codierung ausgebildet. Durch den Versatz zeigt der Teilbereich der versetzten Prägeelemente ein von seiner Umgebung abweichendes Erscheinungsbild, so dass die Form dieses Teilbereichs eine weitere, visuell erkennbare Information darstellt. Die versetzten Prägeelemente können die gleiche Form wie die unversetzten Prägeelemente aufweisen, können aber zur Kontraststeigerung auch eine abweichende Form aufweisen. Alternativ oder zusätzlich können die versetzten Prägeelemente auch eine von der Abmessung dp oder Rasterweite Wp der unversetzten Prägeelemente abweichende Abmessung bzw. Rasterweite aufweisen.

In einer weiteren vorteilhaften Ausgestaltung ist das zweidimensionale Raster von Prägeelementen als ein regelmäßiges zweidimensionales Raster, insbesondere als ein regelmäßiges zweidimensionales Raster erhabener oder vertiefter Prägeelemente ausgebildet.

Das Linienraster der Beschichtung enthält vorteilhaft eine Vielzahl sich nicht schneidender und vorzugsweise fast, aber nicht vollständig paralleler Linien. Genauer weisen die Linien mit Vorteil einen weitgehend, jedoch entlang der Längsausdehnung der Linien nicht vollständig konstanten Abstand auf. Da die Linien nicht vollständig parallel sind, hat das Linienraster keine exakte Rasterweite, allerdings kann eine mittlere Rasterweite $W_L$ des Linienrasters dadurch angegeben werden, dass der Abstand benachbarter Linien über die Längsausdehnung der Linien und die im Linienraster vorliegenden Linien gemittelt wird. Die Angabe, dass die Linien einen weitgehend konstanten Abstand aufweisen, bedeutet dann, dass der Abstand zweier benachbarter Linien entlang mehr als 90% der Längsausdehnung der beiden Linien um weniger als 20%, bevorzugt weniger als 10% vom mittleren Abstand der beiden Linien abweicht.

Vorzugsweise sind das Linienraster und das Prägeelementraster so aufeinander abgestimmt, dass die Rasterweite $W_P$ des Prägeelementrasters in einer Richtung senkrecht oder unter 60° zum Linienraster im Wesentlichen gleich der mittleren Rasterweite $W_L$ ist. Auf diese Weise kann sichergestellt werden, dass die Liniensegmente der Linien des Linienrasters jeweils im Wesentlichen vollständig auf den Prägeelementen des Prägeelementrasters zu liegen kommen.

Die Position eines Liniensegments auf einem Prägeelement ist mit Vorteil jeweils durch eine Phasenfunktion $\phi(x,y)$ gegeben, die von der Position (x,y) des Prägeelements in der optisch variablen Struktur abhängt und deren Funktionswert die relative Position des Liniensegments auf dem Prägeelement senkrecht zur Längenausdehnung des Liniensegments, normiert auf das Einheitsintervall [0,1], angibt. Die Phasenfunktion $\phi(x,y)$ variiert dabei ortsabhängig so, dass beim Kippen des Sicherheitselements ein Bewegungseffekt, insbesondere ein Pump- oder Rotationseffekt entsteht.

In einer vorteilhaften Ausgestaltung hängt die Phasenfunktion $\phi(x,y)$ direkt, insbesondere linear vom Winkel zwischen der Position (x,y) des Prägeelements und einem festen Bezugspunkt (xo, yo) in der optisch variablen Struktur ab, so dass beim Kippen des Sicherheitselements ein Rotationseffekt um den Bezugspunkt $(x_0, y_0)$ entsteht. Die Phasenfunktion ist in diesem Fall bevorzugt durch

$$\phi(x,y) = \mathrm{mod}((\alpha + k*\arg((x-x_0)+i(y-y_0))/(2\pi), 1)$$

mit einer ganzen Zahl k≠0 und einem Offsetwinkel $\alpha$ gegeben, wobei mod(x,y) die Modulofunktion und arg(z) das Argument einer komplexen Zahl darstellt. Das Linienraster erzeugt dann bei der Betrachtung den visuellen Eindruck einer sich beim Kippen um den Bezugspunkt drehenden Windmühlen-Struktur mit |k| Flügeln, wobei das Vorzeichen von k den Drehsinn der Flügel beim Kippen beschreibt.

Wie erwähnt ist die Erfindung nicht auf Gestaltungen mit einem einzigen Linienraster beschränkt, vielmehr kann die Beschichtung mit Vorteil auch zwei oder mehr Linienraster umfassen, wobei die Parameter 'Position des Liniensegments auf dem Prägeelement', 'Orientierung des Liniensegments auf dem Prägeelement' und 'Form des Liniensegments' für die Liniensegmente jedes Linienrasters unabhängig voneinander variieren.

Die Linienraster können dabei unterschiedliche Bewegungseffekte oder gleiche Bewegungseffekte in gleiche oder unterschiedliche, insbesondere gegenläufige Richtungen erzeugen. Mit Vorteil sind die Linien unterschiedlicher Linienraster mit unterschiedlichen Farben aufgebracht, um die Bewegungseffekte der beiden Linienraster visuell voneinander abzuheben. Grundsätzlich können aber auch bereits die Linien eines Linienrasters lokal unterschiedliche Farben aufweisen, um unterschiedlich gefärbte Bereiche zu erzeugen.

Wird jedem Linienrasters eine durch die Linienrichtung definierte Vorzugsrichtung zugeordnet, so schließen die Vorzugsrichtungen zwei oder mehrerer Linienraster dann mit Vorteil einen Winkel von etwa 60° oder etwa 90° miteinander ein.

Für eine Anordnung von nicht langgestreckten, beispielsweise im Wesentlichen sphärischen Prägeelementen mit runder Basisfläche und asphärischem Höhenverlauf ist es möglich, die verwendete Phasenfunktion als Summe zweier Phasenfunktionen darzustellen,

$$\varphi\,(x,y) = \varphi_A(x,y) + \varphi_B\,(x,y),$$

wobei $\varphi_A(x,y)$ einen Bewegungseffekt beim Verkippen in Nord-Süd Richtung (Kippung um die x-Achse) beschreibt und $\varphi_B(x,y)$ einen Bewegungseffekt beim Verkippen in Ost-West-Richtung (Kippung um die y-Achse) beschreibt. Dabei können die einzelnen Phasenfunktionen $\varphi_A(x,y)$ und $\varphi_B(x,y)$ selbst aus zwei oder mehr Phasenfunktionen zusammengesetzt sein, die denselben Bewegungseffekt mit unterschiedlichen Farben und konstantem Versatz zueinander beschreiben. Beispielsweise kann mit den Farben Rot und Blau

$$\varphi_A(x,y) = \varphi_{A,\,rot}\,(x,y) + \varphi_{A,\,blau}\,(x,y)$$

sein, wobei $\varphi_{A,\,rot}(x,y) = C + \varphi_{B,\,blau}(x,y)$ ist und C eine Konstante, beispielsweise 0,5 ist.

Die Beschichtung eines Sicherheitselements kann mehrere Teilbereiche aufweisen, in denen die Linienraster jeweils unterschiedliche Bewegungseffekte erzeugen. Die Teilbereiche können dabei insbesondere in Form von Mustern, Zeichen oder einer Codierung angeordnet sein, so dass durch die bereichsweise unterschiedlichen Bewegungseffekte eine Zusatzinformation entsteht. Beispielsweise kann ein Teilbereich in Form einer Wertzahl ausgebildet sein und einen Kippeffekt zeigen, während der umgebende Teilbereich einen Rotationseffekt zeigt. Derartige grundsätzlich verschiedene Bewegungseffekte in unmittelbarer Nachbarschaft sind sehr auffällig und für den Nutzer daher leicht einzuprägen und leicht zu prüfen.

In einer Weiterbildung kann das Sicherheitselement einen Teilbereich in Form von Mustern, Zeichen oder einer Codierung aufweisen, der beim Kippen des Sicherheitselements statisch bleibt.

In einer vorteilhaften Ausgestaltung sind das oder die Linienraster in dem Teilbereich ausgespart, so dass in dem Teilbereich keine Liniensegmente auf den Prägeelementen vorliegen. Die optisch variable Struktur erscheint in dem Teilbereich beim Kippen des Sicherheitselements unabhängig von der Betrachtungsrichtung beispielsweise hochreflektierend, insbesondere silbrig glänzend, oder mit der Farbe der kontrastierenden Hintergrundschicht und bildet auf diese Weise eine statische Information.

Nach einer Variante können die Linien in dem Teilbereich ohne eine ortsabhängige Variation ausgebildet sein und in einem bestimmten Abstand genau parallel zueinander verlaufen. Das Linienraster ist in dem Teilbereich beim Kippen des Sicherheitselements dann nur aus einer bestimmten Betrachtungsrichtung zu sehen, wohingegen die optisch variable Struktur in dem Teilbereich aus den übrigen Betrachtungsrichtungen beispielsweise hochreflektierend oder mit der Farbe der kontrastierenden Hintergrundschicht erscheint und damit eine Information bildet, die quasi statisch bleibt.

In einer alternativen Ausgestaltung können bei einer Beschichtung, die zwei oder mehr, mit unterschiedlichen Farben aufgebrachte Linienraster umfasst, in dem Teilbereich nur Liniensegmente einer Farbe auf den Prägeelementen vorliegen, während die Linien der in anderen Farben aufgebrachten Linienraster in dem Teilbereich ausgespart sind. Entsprechend erscheint der Teilbereich beim Kippen des Sicherheitselements nur in der Farbe des nicht ausgesparten Linienrasters, während der visuelle Eindruck des übrigen Sicherheitselements abhängig von der Betrachtungsrichtung variiert.

Nach einer Variante kann in dem Teilbereich, in dem keine Liniensegmente oder nur Liniensegmente einer Farbe auf den Prägeelementen vorliegen, zusätzlich vollflächig eine Farbe aufgebracht sein, um beispielsweise den statischen Effekt noch zu verstärken.

In einer weiteren vorteilhaften Ausgestaltung können die Liniensegmente in dem Teilbereich mit einer stark deckenden Farbe überdruckt sein.

In einer weiteren Ausgestaltung kann alternativ das Prägeraster in dem Teilbereich ausgespart sein, so dass den Liniensegmenten des Linienrasters in dem Teilbereich keine Prägeelemente zugeordnet sind. Beim Kippen des Sicherheitselements ändert sich der visuelle Eindruck des Teilbereichs aufgrund der fehlenden räumlichen Tiefe und der dadurch fehlenden Abhängigkeit von der Betrachtungsrichtung nicht.

Wie weiter oben bereits angesprochen, kann die optisch variable Struktur ferner eine Zusatzinformation aufweisen, die durch eine bereichsweise Variation der Prägestruktur entsteht. So kann die Zusatzinformation beispielsweise durch eine Variation der Anordnung nicht linienförmiger Prägeelemente, wie einem bereichsweisen Versatz oder einer bereichsweisen Änderung der Rasterweite entstehen. Derartige Variationen führen beispielsweise zu einer bereichsweisen Farbänderung. Auch eine bereichsweise Variation der geometrischen Form nicht linienförmiger Prägeelemente, insbesondere durch Vorsehen eines partiellen Ausschnitts aus der Geometrie der jeweiligen nicht linienförmigen Prägeelemente derart, dass der jeweiligen geometrischen Form der nicht linienförmigen Prägeelemente dieser partielle Ausschnitt fehlt, ist denkbar.

Eine Zusatzinformation kann ferner durch eine (makroskopische) Zusatzinformation im Prägewerkzeug entstehen, die zusätzlich zur Prägestruktur (und dieser überlagert) eine bereichsweise Erhebung oder Vertiefung in einem Teilbereich, insbesondere in Form von Mustern, Zeichen oder einer Codierung bewirkt.

Die Linienbreiten der gedruckten Linienraster sind mit Vorteil kleiner als das 0,5-fache der Rasterweite $W_P$ des Prägeelementrasters. Sie liegen vorzugsweise im Bereich von 25 μm bis 300 μm, bevorzugt im Bereich von 25 μm bis 250 μm und besonders bevorzugt im Bereich von 25 μm bis 150 μm. Die Linien können eine konstante Linienbreite haben oder die Linienbreite kann sich entlang der Längsausdehnung der Linien verändern, sich insbesondere vergrößern, verkleinern oder ein- oder zweiseitig moduliert sein. Die Linien des gedruckten Linienrasters können dabei sowohl als positive (gedruckte) als auch als negative (im Druckbild ausgesparte) Linien dargestellt sein. Die angegebenen Linienbreiten beziehen sich im Fall von positiven Linien auf die Breiten der tatsächlich gedruckten bzw. mit Farbe bedeckten Bereiche bzw. im Fall von negativen Linien auf die Breiten ausgesparter linienförmiger Zwischenräume ohne Farbe.

Die Linienraster können insbesondere im Offset-, Nyloprint-, Flexo- oder Siebdruckverfahren aufgebracht sein, wobei sowohl oxidativ als auch UV trocknende Farben einsetzbar sind.

In einer vorteilhaften Ausgestaltung weist die Farbe des aufgedruckten Linienrasters oder, falls zwei oder mehr, mit unterschiedlichen Farben aufgebrachte Linienraster vorgesehen sind, zumindest die Farbe eines der Linienraster lumineszierende, insbesondere fluoreszierende Eigenschaften auf.

Bei Ausgestaltungen, bei denen die kontrastierende Hintergrundschicht großflächig ausgespart ist, kann die Farbe des aufgedruckten Linienrasters oder, falls zwei oder mehr, mit unterschiedlichen Farben aufgebrachte Linienraster vorgesehen sind, zumindest die Farbe eines der Linienraster aus einem Farbgemisch bestehen, das zumindest eine laserabsorierende Gemischkomponente enthält. Durch Beaufschlagung mit einem Laser kann eine solche Farbe in der Aussparung gezielt geändert werden. Das Grundprinzip eines solchen Verfahrens ist in der Druckschrift DE 10 2013 000 152 erläutert, deren Offenbarung insoweit in die vorliegende Beschreibung aufgenommen wird.

Die Prägestruktur ist vorteilhaft mit einer transparenten Deckschicht versehen, die die Prägeelemente einebnet und so insbesondere eine Abformung der optisch variablen Struktur verhindert.

Als Substrat des Sicherheitselements kommen insbesondere Trägermaterialien aus Baumwollfasern, aus Polymeren oder ein Substrat mit einem hybriden Aufbau in Frage. Das Sicherheitselement kann dabei Teil eines das Substrat bereitstellenden Datenträgers sein, so dass das Substrat des Sicherheitselements einen Teil des Substrats des Datenträgers darstellt. Das Sicherheitselement kann auch mit seinem Substrat auf einen Datenträger aufgebracht oder in einen Datenträger eingebracht sein, so dass das Sicherheitselement und der Datenträger jeweils ein eigenes, getrenntes Substrat aufweisen.

Die Erfindung enthält auch einen Datenträger mit einem Sicherheitselement der beschriebenen Art, wobei das Sicherheitselement in vorteilhaften Gestaltungen in oder über einem Fensterbereich oder einer durchgehenden Öffnung des Datenträgers angeordnet ist. Eine solche Anordnung ist insbesondere bei zweiseitigen Gestaltungen von Vorteil, bei denen einer der Bewegungseffekte in direkter Aufsicht, der andere bei Betrachtung durch den Fensterbereich oder die durchgehende Öffnung sichtbar ist. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

In einer vorteilhaften Ausgestaltung weist der Datenträger ein Folienelement auf, das durch das Sicherheitselement abgesichert ist, indem sich das Sicherheitselement über zumindest einen Teilbereich des Folienelements und zumindest einen an das Folienelement angrenzenden Bereich des Datenträgers erstreckt. Eine eventuelle Manipulation oder sogar Entfernung des Folienelements fällt dann wegen des überlappenden Sicherheitselements sofort auf. Das Folienelement kann insbesondere durch einen Sicherheitsstreifen, einen Sicherheitsfaden oder einen Patch gebildet sein.

Die Erfindung enthält weiter ein Verfahren nach Anspruch 25.

In einer Verfahrensvariante wird die kontrastierende Hintergrundschicht vorzugsweise vollflächig auf die erste Hauptfläche aufgebracht und das oder die Linienraster werden auf die kontrastierende Hintergrundschicht aufgedruckt. Zur Erzeugung einer statischen Information kann das Linienraster zusammen mit der kontrastierenden Hintergrundschicht in einem Teilbereich in Form von Mustern, Zeichen oder einer Codierung entfernt werden, insbesondere mittels Laserablation, so dass der visuelle Eindruck in dem Teilbereich beim Kippen des Sicherheitselements keine Änderung erfährt.

In einer alternativen Verfahrensvariante können das oder die Linienraster auf die erste Hauptfläche aufgedruckt werden, die kontrastierende Hintergrundschicht vorzugsweise vollflächig über den Linienrastern aufgebracht werden und nachfolgend die Linienraster durch bereichsweise Entfernung der Hintergrundschicht, beispielsweise mittels Laserablation freigelegt werden. Um zusätzlich eine statische Information zu erzeugen, kann die bereichsweise Entfernung der Hintergrundschicht in einem Teilbereich ausbleiben, so dass dort der visuelle Eindruck beim Kippen des Sicherheitselements weiterhin durch die kontrastierende Hintergrundschicht vorgegeben wird.

Die Prägestruktur der ersten Hauptfläche wird vorteilhaft durch eine Blindprägung erzeugt.

Die bevorzugte Prozessreihenfolge ist dann: Aufbringen der Hintergrundschicht, vorzugsweise im Siebdruck, Aufdrucken des Linienrasters, vorzugsweise im Offsetdruck und Erzeugen der Prägestruktur, vorzugsweise im nicht farbführenden Stichtiefdruck. Alternativ ist auch die Prozessreihenfolge: Aufbringen der Hintergrundschicht, Erzeugen der Prägestruktur und Aufdrucken des Linienrasters möglich.

Zur Erzeugung der Prägestrukturen kann das Substrat auch mit einem photoaushärtbaren Lack beschichtet werden und die gewünschte Form der Prägeelemente in diesen Lack geprägt und die geprägte Struktur mit der Hintergrundschicht beschichtet werden, beispielsweise durch Bedampfung mit Metall oder Bedruckung mit einer geeigneten Druckfarbe. Auf die so erzeugten beschichteten Prägeelemente werden dann in einem Druckverfahren die gewünschten Linienraster aufgebracht. Die Aushärtung der Lackschicht erfolgt vorzugsweise während des Prägeprozesses durch UV-Bestrahlung, insbesondere von der dem Prägewerkzeug gegenüberliegenden Seite des Substrats her, und/oder durch ein transparentes Prägewerkzeug hindurch.

In einer vorteilhaften Weiterbildung des Verfahrens ist vorgesehen, dass

- eine zweite Beschichtung auf der zweiten Hauptfläche erzeugt wird, indem zumindest ein zweites Linienraster auf die zweite Hauptfläche des Substrats aufgebracht wird,
- in dem Prägeschritt zusammen mit der Prägestruktur auf der ersten Hauptfläche gleichzeitig eine deckungsgleiche Prägestruktur mit inverser Geometrie auf der zweiten Hauptfläche ausgebildet wird,
- wobei die zweite Beschichtung und die zweite Prägestruktur so kombiniert werden, dass im Wesentlichen auf jedem Prägeelement zumindest ein Liniensegment einer Linie des Linienrasters der zweiten Beschichtung liegt, und für das Linienraster der zweiten Beschichtung zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster der zweiten Beschichtung beim Kippen des Sicherheitselements ein Bewegungseffekt, insbesondere ein Pump- oder Rotationseffekt entsteht.

Das zumindest eine Linienraster der ersten Beschichtung und das zumindest eine Linienraster der zweiten Beschichtung werden mit Vorteil im Simultanverfahren auf die erste bzw. zweite Hauptfläche aufgebracht.

Das Sicherheitselement kann auf allen Arten von Substraten, insbesondere einem Baumwollsubstrat, Polymersubstrat oder Hybridsubstrat aufgebracht, insbesondere aufgedruckt sein. Dabei können die Bestandteile des Sicherheitselements durch die genannten Druckverfahren (etwa Sieb-, Offset-, Flexo- und Stichtiefdruck) insbesondere direkt auf das gewünschte Zielsubstrat aufgedruckt werden, ohne dass ein Faden oder Patch erforderlich wäre. Nach dem Prägen der Prägestruktur kann der dadurch eventuell verformte Rückseitenbereich des Substrats, sofern er nicht erfindungsgemäß genutzt wird, zur Stabilisierung mit Lack aufgefüllt werden.

Das beschriebene Sicherheitselement kann fließende Bewegungseffekte erzeugen, die je nach Gestaltung beim Kippen in allen Raumrichtungen in Erscheinung treten können. Trotz der visuell eindrucksvollen Effekte ist das Sicherheitselement einfach und kostengünstig herstellbar, da nur im Sicherheitsbereich übliche Druckverfahren eingesetzt werden müssen. Das Sicherheitselement kann auf praktisch alle Arten von Substraten aufgebracht werden und benötigt keinen besonderen Träger. Durch eine Einebnung der Prägestruktur kann eine Abformung wirksam verhindert und dadurch eine hohe Fälschungssicherheit erreicht werden. Weiter kann das Sicherheitselement aufgrund des einfachen Herstellungsverfahrens auch gut mit anderen Stichtiefdruckmerkmalen auf einem Datenträger kombiniert und mit diesen gepassert werden.

Die obigen Ausführungen zu den möglichen Ausgestaltungen der Beschichtung, der Linienraster, der Hintergrundschicht und dem Substrat gelten gleichermaßen für die Ausgestaltungen mit einer Prägestruktur mit einem eindimensionalen Raster. Dabei ist lediglich zu beachten, dass anderes als bei den Ausgestaltungen mit einem zweidimensionalen Raster bei den eindimensionalen Prägeelement-Rastern nicht die Position, Orientierung und Form eines Liniensegments variiert, sondern die lokale Position, die Orientierung und Form der Linie über der Ausdehnung der optisch variablen Struktur.

Die lokale Position einer Linie auf einem Prägeelement ist mit Vorteil jeweils durch eine Phasenfunktion $\phi(x,y)$ gegeben, wobei alle im Zusammenhang mit zweidimensionalen Prägeelement-Rastern genauer beschriebenen Phasenfunktionen eingesetzt werden können. Auch dabei ist lediglich zu beachten, dass die Phasenfunktion in diesem Fall nicht die relative Position eines Liniensegments auf dem Prägeelement beschreibt, sondern die lokale Position der Linie auf dem Prägeelement.

Die Position eines Liniensegments auf einem Prägeelement ist demnach durch eine Phasenfunktion $\phi(x,y)$ gegeben, die von der Position (x,y) des Prägeelements in der optisch variablen Struktur abhängt und deren Funktionswert die lokale Position der Linie auf dem Prägeelement, normiert auf das Einheitsintervall [0,1], angibt. Die Phasenfunktion $\phi(x,y)$ variiert dabei ortsabhängig so, dass beim Kippen des Sicherheitselements ein Bewegungseffekt, insbesondere ein Pump- oder Rotationseffekt entsteht.

Die Ausgestaltungen mit eindimensionalem Raster erzeugen im Wesentlichen nur beim Kippen um eine parallel zu den langgestreckten Prägeelementen liegenden Achse einen Bewegungseffekt, während bei einer Kippung um eine senkrecht zu den langgestreckten Prägeelementen liegende Achse im Wesentlichen kein Bewegungseffekt erzeugt wird. Liegen die langgestreckten Prägeelemente beispielsweise mit ihrer Längsrichtung parallel zu x-Achse und ihrer Querrichtung parallel zur y-Achse, so tritt ein Bewegungseffekt nur beim Verkippen in Nord-Süd Richtung (um die x-Achse), nicht aber beim Verkippen in Ost-West-Richtung (um die y-Achse) auf. Mit der oben eingeführten Terminologie haben die verwendeten Phasenfunktionen daher nur den Anteil für den Bewegungseffekt beim Verkippen in Nord-Süd Richtung

$$\varphi(x,y) = \varphi_A(x,y).$$

Es versteht sich, dass die Phasenfunktion $\varphi_A(x,y)$ auch hier aus zwei oder mehr Phasenfunktionen zusammengesetzt sein kann, die denselben Bewegungseffekt mit unterschiedlichen Farben und konstantem Versatz zueinander beschreiben, also beispielsweise für die Farben Rot und Blau:

$$\varphi_A(x,y) = \varphi_{A,\,rot}(x,y) + \varphi_{A,\,blau}(x,y),$$

mit $\varphi_{A,\,rot}(x,y) = C + \varphi_{A,\,blau}(x,y)$ und einer Konstante C.

Mit Vorteil ist dabei vorgesehen, dass die Linien im Wesentlichen parallel zu der Längsrichtung der langgestreckten Prägeelemente angeordnet sind.

Für weitere Details des Herstellungsverfahrens wird auf die obigen Ausführungen zu den zweidimensionalen Gestaltungen verwiesen, die bis auf die Dimensionalität des Rasters auch für die eindimensionalen Gestaltungen gelten.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1     eine schematische Darstellung einer Banknote mit einem erfindungsgemäßen optisch variablen Sicherheitselement,

Fig. 2     in (a) eine Aufsicht auf einen Ausschnitt des Sicherheitselements der Fig. 1 und in (b) einen Querschnitt durch das Sicherheitselement entlang der Linie B-B von (a),

Fig. 3     zur Erläuterung des erfindungsgemäßen Prinzips in (a) ein einzelnes erhabenes Prägeelement und in (b) bis (d) verschiedene Positionen eines Liniensegments auf dem Prägeelement in Aufsicht,

Fig. 4     in zweidimensionaler Projektion einen Ausschnitt auf das Linienraster des Sicherheitselements der Fig. 1,

Fig. 5     eine Ansicht wie in Fig. 4 für ein Linienraster eines anderen erfindungsgemäßen Sicherheitselements,

Fig. 6     in (a) das Erscheinungsbild eines Sicherheitselements mit zwei Linienrastern bei senkrechter Betrachtung und in (b) einen Detailausschnitt des Sicherheitselements von (a),

Fig. 7     ein weiteres Ausführungsbeispiel eines Sicherheitselements mit verschiedenfarbigen Linienrastern,

Fig. 8     ein Ausführungsbeispiel eines Sicherheitselements mit mehreren, im Wesentlichen senkrecht aufeinander stehenden Linienrastern,

Fig. 9     ein weiteres Ausführungsbeispiel eines Sicherheitselements mit mehreren, im Wesentlichen senkrecht aufeinander stehenden Linienrastern,

Fig. 10    eine Abwandlung des Sicherheitselements von Fig. 4, bei dem der dort beschriebene Bewegungseffekt mit einem statischen Effekt kombiniert ist,

Fig. 11    einen Querschnitt durch ein erfindungsgemäßes Sicherheitselement mit optisch variablen Strukturen auf gegenüberliegenden Hauptflächen des Substrats des Sicherheitselements,

Fig. 12    ein erfindungsgemäßes Sicherheitselement mit zweiseitiger Gestaltung, aber nur einer optisch variablen Struktur auf der ersten Hauptfläche des Substrats,

Fig. 13    ein Ausführungsbeispiel eines Sicherheitselements mit einer zusätzlichen linienförmigen Durchsichtsinformation,

Fig. 14    ein weiteres Ausführungsbeispiel eines Sicherheitselements mit einer musterförmig ausgebildeten Hintergrundschicht,

Fig. 15    ein zweiseitiges Sicherheitselement, das in einem opaken Bereich eines Datenträgers vorgesehen ist,

Fig. 16    eine Abwandlung des Sicherheitselements der Fig. 15, bei der die Hintergrundschichten nicht durch reflektierende Schichten gebildet sind,

Fig. 17    die Prägestruktur eines erfindungsgemäßen Sicherheitselements, die sowohl erhabene als auch vertiefte Prägeelemente enthält, die in Form der Ziffernfolge "50" angeordnet sind,

Fig. 18    eine Aufsicht auf einen Ausschnitt eines Sicherheitselements, dessen Prägestruktur einen Teilbereich mit langgestreckten Prägeelementen enthält,

Fig. 19    ein erfindungsgemäßes Sicherheitselement, dessen Prägestruktur einen Teilbereich mit gegen das Raster versetzten Prägeelementen umfasst,

Fig. 20    eine Banknote mit einem durch ein erfindungsgemäßes Sicherheitselement abgesicherten Folienelement,

Fig. 21    ein erfindungsgemäßes Sicherheitselement mit mehreren Teilbereichen, in denen die Linienraster unterschiedliche Bewegungseffekte erzeugen, und

Fig. 22    in zweidimensionaler Projektion einen Ausschnitt auf das Linienraster eines Sicherheitselements mit einem eindimensionalen Raster langgestreckter Prägeelemente.

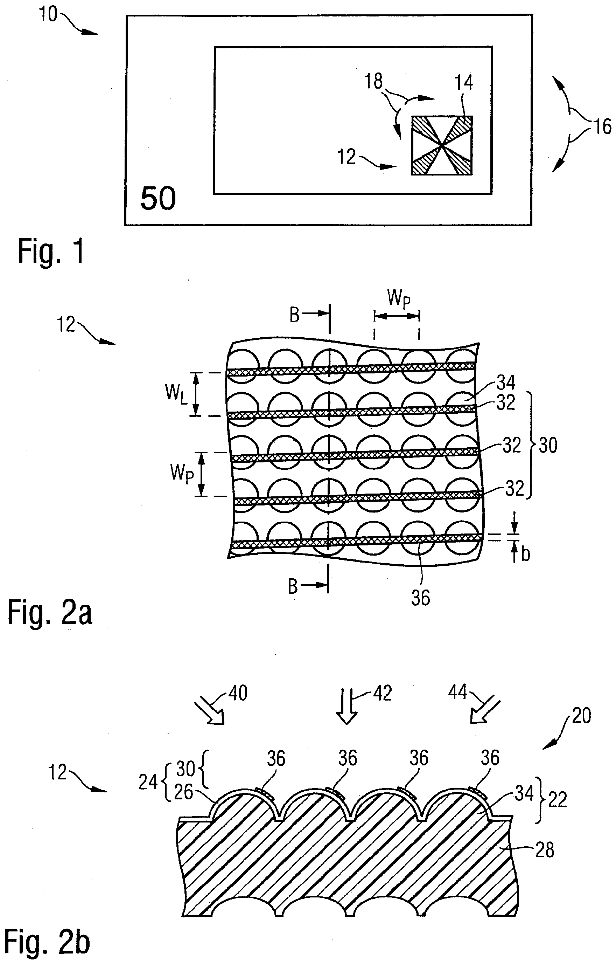

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12. Das Sicherheitselement 12 weist ein metallisch glänzendes Erscheinungsbild mit einer zusätzlichen farbigen, windmühlenartigen Flügelstruktur 14 auf. Dabei erzeugt bereits eine kleine Verkippung 16 der Banknote nach oben oder unten eine visuell sehr auffällige scheinbare Rotationsbewegung 18 der farbigen Flügel 14.

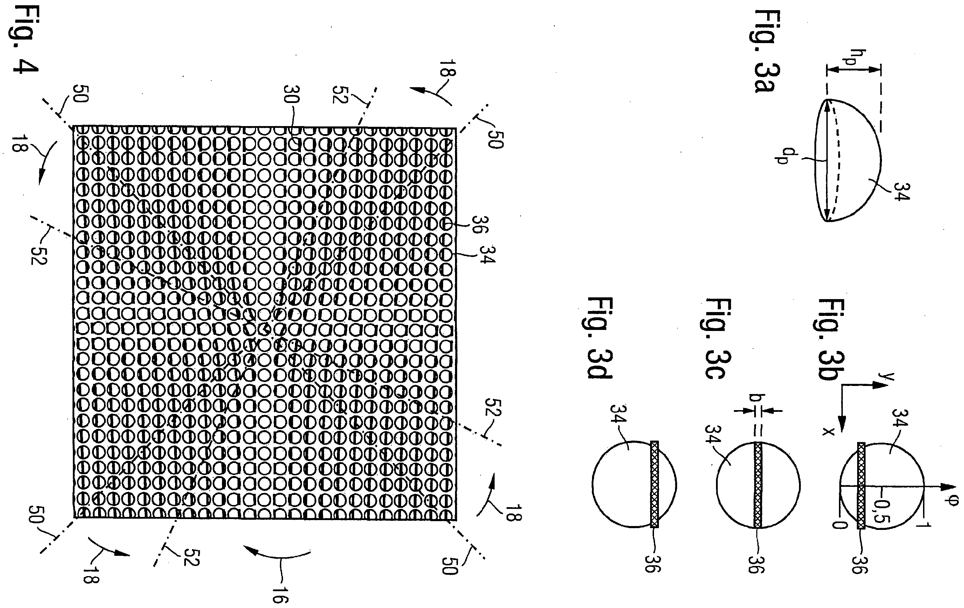

Der Aufbau eines erfindungsgemäßen Sicherheitselements und das Zustandekommen des auffälligen farbigen Rotationseffekts werden nun mit Bezug auf die Figuren 2 und 3 näher erläutert, wobei Fig. 2(a) eine Aufsicht auf einen Ausschnitt des Sicherheitselements 12 und Fig. 2(b) einen Querschnitt durch das Sicherheitselement entlang der Linie B-B von Fig. 2(a) zeigt. Zur Erläuterung des erfindungsgemäßen Prinzips ist in Fig. 3(a) weiter ein einzelnes erhabenes Prägeelement 34 dargestellt und Fig. 3(b) bis (d) zeigen verschiedene Positionen eines Liniensegments 36 auf dem Prägeelement 34 in Aufsicht.

Das Sicherheitselement 12 enthält eine optisch variable Struktur 20, die durch eine Kombination einer Prägestruktur 22 und einer Beschichtung 24 gebildet ist. Die Beschichtung 24 umfasst eine hochreflektierende Hintergrundschicht 26, beispielsweise eine vollflächige reflektierende silberfarbene Druckschicht mit hohem Glanzwert, die im Siebdruck auf das Banknotensubstrat 28 der Banknote 10 aufgedruckt ist. Das Banknotensubstrat 28 stellt in dem Teilbereich, in dem die optisch variable Struktur 20 vorliegt, zugleich das Substrat des Sicherheitselements 12 dar, so dass das Sicherheitselement 12 in die Banknote 10 integriert ist. Die silberne Hintergrundschicht 26 verleiht dem Sicherheitselement 12 sein grundsätzlich metallisch glänzendes Erscheinungsbild.

Auf der Hintergrundschicht 26 ist ein farbiges, beispielsweise goldfarbenes Linienraster 30 aus einer Mehrzahl von im Wesentlichen gleich orientierten Linien 32 aufgedruckt. Die Linien 32 schneiden einander nicht und weisen einen weitgehend, jedoch entlang der Längsausdehnung der Linien nicht vollständig konstanten Abstand auf und werden daher im Rahmen dieser Beschreibung auch als fast-parallel bezeichnet. Wie weiter unten genauer beschrieben, entstehen die gewünschten Bewegungseffekte gerade durch die Abweichung der erfindungsgemäßen Linienraster von Linienrastern mit vollständig parallelen Linien.

Die Linienbreite b der Linien 32 ist im Ausführungsbeispiel für alle Linien 32 gleich und entlang der Längsausdehnung der Linien konstant. Die Linienbreite b liegt vorteilhaft zwischen 50 $\mu$m und 200 $\mu$m, und im Ausführungsbeispiel konkret bei etwa 80 $\mu$m. Da die Linien 32 nicht vollständig parallel sind, kann nur eine mittlere Rasterweite $W_L$ des Linienrasters angegeben werden, die im Ausführungsbeispiel bei $W_L$ = 300 $\mu$m liegt.

Die durch die Hintergrundschicht 26 und das Linienraster 30 gebildete Beschichtung 24 ist mit einer Prägestruktur 22 kombiniert, die aus einem zweidimensionalen quadratischen Raster von Prägeelementen 34 besteht, die im Ausführungsbeispiel durch gestauchte halbkugelförmige Erhebungen gebildet sind, wie in Fig. 3(a) in perspektiver Ansicht gezeigt. Die Erhebungen 34 weisen dabei beispielsweise einen Grundflächendurchmesser $d_P$ von 250 $\mu$m und eine Höhe $h_p$ von 75 $\mu$m auf. Wie in Fig. 2 zu erkennen, ist die Rasterweite $W_P$ des Prägeelementrasters etwas größer als der Grundflächendurchmesser dp und liegt im Ausführungsbeispiel bei 1.2*$d_p$, so dass die Rasterweite $W_P$ des Prägeelementrasters ebenfalls 300 $\mu$m beträgt und daher mit der mittleren Rasterweite $W_L$ des Linienrasters übereinstimmt.

Wie in Fig. 2 gezeigt, sind die Beschichtung 24 und die Prägestruktur 22 durch die übereinstimmenden Werte der Rasterweiten Wp und $W_L$ so miteinander kombiniert, dass einerseits jede Erhebung 34 durch die silberne Hintergrundschicht 26 als kleiner Wölbspiegel wirkt, und dass andererseits im Wesentlichen auf jeder Erhebung 34 ein Liniensegment 36 einer Linie 32 aus dem Linienraster 30 liegt. Wie aus der nachfolgenden Beschreibung deutlich wird, soll grundsätzlich jede Erhebung 34 ein Liniensegment 36 tragen, aufgrund des konkreten Verlaufs der Linien 32 kann es jedoch auch einige Erhebungen 34 in der Prägestruktur geben, auf denen kein Liniensegment 36 zu liegen kommt, oder ein bestimmter Teilbereich der Prägestruktur wird gezielt nicht mit Liniensegmenten belegt, um eine statische Substruktur innerhalb des dynamischen Bewegungseffekts der optisch variablen Struktur zu erzeugen.

Die relative Anordnung eines Liniensegments 36 und des zugehörigen Prägeelements 34, auf dem dieses Liniensegment 36 liegt, ist durch die Position des Liniensegments 36 auf dem Prägeelement 34 und durch die Orientierung des Liniensegments 36 auf dem Prägeelement 34 angegeben. Wird zusätzlich die Form des Liniensegments 36, insbesondere also die Linienbreite b und die Farbe des Liniensegments 36 angegeben, so sind Lage und Aussehen eines bestimmten Liniensegments 36 vollständig charakterisiert.

Von besonderer Bedeutung ist im Rahmen der vorliegenden Erfindung der Parameter 'Position des Liniensegments auf dem Prägeelement'. Diese Liniensegmentposition kann insbesondere durch eine ortsabhängige Phasenfunktion $\phi(x,y)$ angegeben werden, die von der Position (x,y) des Prägeelements 34 innerhalb der optisch variablen Struktur 20 abhängt und deren Funktionswert die relative Position des Liniensegments 36 auf dem Prägeelement senkrecht zur Längenausdehnung des Liniensegments 36, normiert auf das Einheitsintervall [0,1], angibt.

Sind die Linien 32 beispielsweise wie in Fig. 3(b) im Wesentlichen parallel zur x-Achse ausgerichtet, so gibt die Phasenfunktion $\phi(x,y)$ die y-Position des Liniensegments 36 auf dem Prägeelement 34 an, wobei ein Wert $\phi$= 0 eine Lage am unteren Rand und ein Wert $\phi$= 1 eine Lage am oberen Rand bedeutet. In den Figuren 3(b) bis (d) ist zur Illustration jeweils die Lage eines Liniensegments 36 für die Werte $\phi$=0.25 (Fig. 3(b)), $\phi$=0.5 (Fig. 3(c)) und $\phi$ =0.75 (Fig. 3(d)) gezeigt.

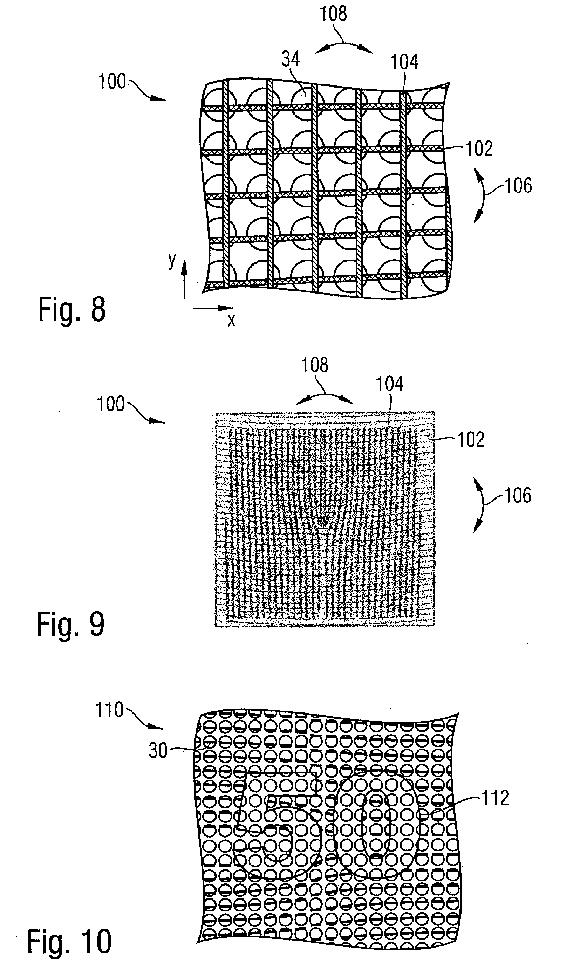

Bei Linien 32, die im Wesentlichen parallel zur y-Achse ausgerichtet sind, wie etwa in Figuren 8 und 9 gezeigt, gibt die Phasenfunktion $\phi(x,y)$ entsprechend die x-Position eines Liniensegments auf dem Prägeelement an, wobei dann ein Wert $\phi$=0 eine Lage am linken Rand und ein Wert $\phi$= 1 eine Lage am rechten Rand bedeutet.

Die gegenwärtigen Erfinder haben nun überraschend gefunden, dass sich durch eine ortsabhängige Variation der Position der Liniensegmente 36 auf den Prägeelementen 34 eine Vielzahl unterschiedlicher Bewegungseffekte beim Kippen des Sicherheitselements 12 realisieren lassen. All diese unterschiedlichen Bewegungseffekte können durch eine entsprechende ortsabhängige Phasenfunktion $\phi(x,y)$ beschrieben werden.

Wie in Fig. 2(b) illustriert, erzeugen die auf den Erhebungen 34 angeordneten Liniensegmente 36 je nach Betrachtungsrichtung 40, 42, 44 einen unterschiedlichen Farb- und Helligkeitseindruck, der zudem bei einer ortabhängigen Position der Liniensegmente 36 auch von der Position der jeweiligen Erhebung 34 innerhalb der optisch variablen Struktur abhängt. Das Sicherheitselement 12 zeigt daher bereits bei Betrachtung aus einer festen Betrachtungsrichtung 42 ein vorbestimmtes Bildmotiv, wie etwa die in Fig. 1 dargestellte Flügelstruktur 14. Wird das Sicherheitselement 12 gekippt, so dass sich beispielsweise die Betrachtungsrichtung von der senkrechten Richtung 42 zu einer schrägen Richtung 40, 44 ändert, so verändern sich Farbe und Helligkeit der optisch variablen Struktur fließend, aber lokal unterschiedlich, so dass der Eindruck einer Bewegung entsteht. Je nach Auslegung des Linienrasters können lineare Bewegungen, Rotationsbewegungen oder komplexe Bewegungsformen, wie etwa Pump- bzw. "Zoom"-Effekte oder bereichsweise gegenläufige Bewegungen erzeugt werden.

Als besonders eindrucksvoll haben sich Rotationseffekte herausgestellt, da die Erzeugung einer Rotationsbewegung durch lineares Kippen eines Sicherheitselements der Intuition zuwider läuft und für den Betrachter daher überraschend wirkt. Solche Rotationseffekte können dadurch erzeugt werden, dass der Parameter 'Position des Liniensegments auf dem Prägeelement' direkt, insbesondere linear vom Winkel zwischen der Position (x,y) des Prägeelements und einem festen Bezugspunkt (xo, yo) in der optisch variablen Struktur abhängt.

Um in einem quadratischen Raster halbkugelförmiger Erhebungen 34 den visuellen Eindruck von vier, sich um einen in der Mitte der optisch variablen Struktur liegenden Bezugspunkt drehenden "Windmühlen"-Flügeln zu erzeugen, kann beispielsweise die Phasenfunktion

$$\phi_1(x,y) = mod\ (4*arg(x+iy)/(2\pi),\ 1)$$

gewählt werden, wobei mod(x,y) die Modulofunktion und arg(z) das Argument einer komplexen Zahl darstellt.

Figur 4 zeigt in zweidimensionaler Projektion einen Ausschnitt auf das zugehörige Linienraster 30 des Sicherheitselements 12 mit den gemäß der Phasenfunktion $\phi_1(x,y)$ angeordneten Liniensegmenten 36 und den im Umriss angedeuteten Prägeelementen 34. Wegen der in der zweidimensionalen Projektion fehlenden räumlichen Tiefe und der dadurch fehlenden Abhängigkeit des visuellen Eindrucks von der Betrachtungsrichtung stellt sich in der Projektion der Fig. 4 der beschriebene Rotationseffekt nicht ein, er entsteht nur bei einem echt dreidimensionalen, geprägten Sicherheitselement 12.

Bei senkrechter Betrachtung des Sicherheitselements 12 treten die in der Mitte ($\phi_1$ = 0.5) und damit am höchsten Punkt der Erhebungen 34 liegenden Liniensegmente 36 am stärksten in Erscheinung, während die auf den oberen und unteren Flanken der Erhebungen 34 liegenden Liniensegmente visuell zurücktreten. Wie in Fig. 4 zu erkennen, sind die in der Mitte der Erhebungen 34 liegenden Liniensegmente 36 im Wesentlichen entlang der beiden Diagonalen 50 angeordnet, so dass bei senkrechter Betrachtung das in Fig. 1 gezeigte Erscheinungsbild mit vier, sich entlang der Diagonalen 50 erstreckenden Flügeln 14 entsteht.

Wird das Sicherheitselement 12 nun beispielsweise nach unten gekippt (Kippung 16), so gelangen die bisher am höchsten Punkt liegenden Liniensegmente 36 durch die Kippung aus Sicht des Betrachters an die unteren Flanken der Erhebungen 34 und treten daher visuell zurück. Andererseits werden die zuvor an den oberen Flanken liegenden Liniensegmente 36 an den höchsten Punkt gekippt, so dass diese nunmehr das visuelle Erscheinungsbild dominieren. Wie in Fig. 4 gezeigt, liegen die zugehörigen Erhebungen 34 alle im Wesentlichen entlang der um einen Winkel 18 gegen den Uhrzeigersinn gedrehten Diagonalen 52, so dass sich nach der Verkippung 16 ein Erscheinungsbild mit vier, um einen Winkel 18 gegen den Uhrzeigersinn gedrehten Flügeln 14 ergibt. Entsprechend ergibt sich durch eine Verkippung des Sicherheitselements 12 nach oben eine scheinbare Drehung der Flügel 14 im Uhrzeigersinn.

Wie in Fig. 4 weiter erkennbar, haben kleine Verkippungen 16 eine Rotation um einen kleinen Winkel 18, größere Verkippungen eine Rotation um einen größeren Winkel zur Folge, so dass die scheinbare Rotationsbewegung der Flügel 14 beim Kippen fließend abläuft.

Die beschriebenen Effekte ergeben sich unmittelbar aus der gewählten Phasenfunktion $\phi_1(x,y)$, da diese nur vom Winkel zwischen der Position des Prägeelements und dem Bezugspunkt abhängt, so dass die Positionen gleicher Liniensegmentposition sich jeweils radial vom Bezugspunkt nach außen erstrecken (Linien 50, 52 in Fig. 4). Durch eine andere Wahl des Vorfaktors in $\phi_1(x,y)$ kann natürlich auch eine beliebige andere Anzahl an Flügeln oder der entgegengesetzte Drehsinn erzeugt werden. Auch kann sich das Erscheinungsbild der Flügel in radialer Richtung verändern, indem beispielsweise die Linienbreite b mit dem Abstand vom Bezugspunkt variiert wird.

Zur Herstellung des Sicherheitselements 12 wird beispielsweise zunächst die vollflächige, reflektierende silberfarbene Druckschicht 26 auf das Banknotensubstrat 28 der Banknote 10 aufgedruckt. Dann wird das Linienraster 30 im Offsetdruck auf die Silberschicht 26 aufdruckt, beispielsweise mit einer oxidativ oder UV-trocknenden Farbe, z. B. Gelb. Anschließend wird durch Blindprägen im nicht farbführenden Stichtiefdruck die Prägestruktur 22 mit den Erhebungen 34 auf der Oberseite der Banknote 10 erzeugt. Zur Stabilisierung der erhabenen Struktur der Oberseite kann die durch die Prägung verformte Rückseite des Banknotensubstrats 28 mit Lack aufgefüllt werden. Mit Vorteil ist die Prägestruktur 22 zudem mit einer in der Figur nicht dargestellten transparenten Deckschicht versehen, die die Erhebungen 34 einebnet und dadurch eine Abformung der optisch variablen Struktur verhindert.

Als ebenfalls sehr eindrucksvoll haben sich Pumpeffekte beim Kippen des Sicherheitselements 12 erwiesen, bei denen unter unterschiedlichen Kippwinkeln eine sich vergrößernde oder verkleinernde Kontur eines vorgegebenen Motivs sichtbar ist ("Ein- oder Auszoomen des Motivs").

Für ein quadratisches Raster halbkugelförmiger Erhebungen 34 mit einer Rasterweite $W_p$ kann ein Linienraster 60, das den visuellen Eindruck von pumpenden Kreisringen im Abstand von 10 Rasterweiten erzeugt, beispielsweise durch die Phasenfunktion

$$\phi_2(x,y) = mod(abs(x+iy)/10*W_P,\ 1)$$

erhalten werden, wobei abs(z) den Betrag einer komplexen Zahl darstellt.

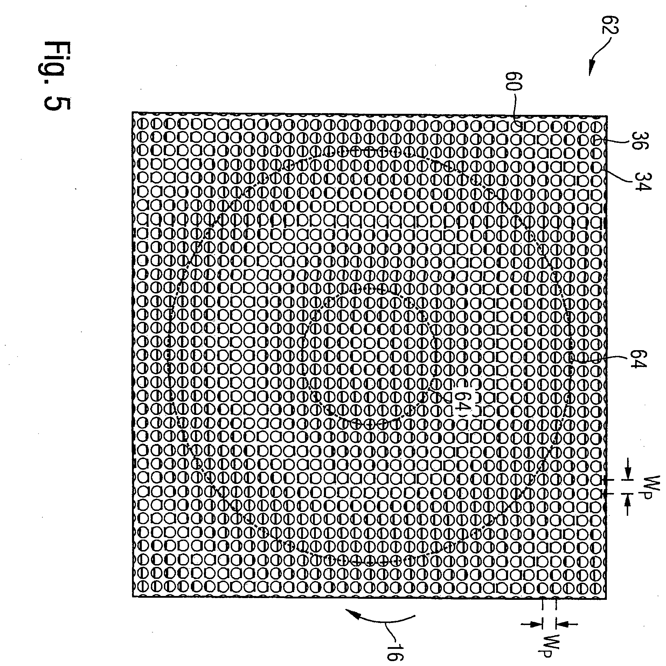

Figur 5 zeigt in zweidimensionaler Projektion einen Ausschnitt auf das zugehörige Linienraster 60 des Sicherheitselements 62 mit den Liniensegmenten 36 und den im Umriss angedeuteten Prägeelementen 34.

Bei senkrechter Betrachtung des Sicherheitselements 62 treten die in der Mitte ($\phi_2$= 0.5) der Erhebungen 34 liegenden Liniensegmente 36 am stärksten in Erscheinung, während die auf den oberen und unteren Flanken der Erhebungen 34 liegenden Liniensegmente visuell zurücktreten. Wie in Fig. 5 zu erkennen, sind bei der Phasenfunktion $\phi_2$ die in der Mitte der Erhebungen 34 liegenden Liniensegmente 36 im Wesentlichen auf konzentrischen Kreisen 64 mit Radien von 5* $W_p$, 15* $W_p$, 25* $W_p$, etc. angeordnet. Bei senkrechter Betrachtung zeigt das Sicherheitselement 62 daher eine Reihe konzentrischer Kreise mit den genannten Durchmessern.

Wird das Sicherheitselement 12 nun beispielsweise in Kipprichtung 16 nach unten gekippt, so geraten die zunächst am höchsten Punkt liegenden Liniensegmente 36 aus Sicht des Betrachters an die unteren Flanken der Erhebungen 34 und treten daher visuell zurück, während die zuvor an den oberen Flanken liegenden Liniensegmente 36 an den höchsten Punkt gekippt werden und das visuelle Erscheinungsbild dominieren. Wie in Fig. 5 zu erkennen, liegen die zugehörigen Erhebungen 34 auf etwas größeren konzentrischen Kreisen, beispielsweise mit Radien 7* $W_p$, 17* $W_p$, etc., so dass sich durch die Verkippung 16 die konzentrischen Kreise 64 zu vergrößern scheinen. Entsprechend ergibt sich durch eine Verkippung des Sicherheitselements 62 in Gegenrichtung eine scheinbare Verkleinerung der konzentrischen Kreise 64, so dass durch ein Hin- und Herkippen des Sicherheitselements 62 der gewünschte Pumpeffekt entsteht.

Es versteht sich, dass auch die Phasenfunktion $\phi_2$ der Fig. 5 nur beispielhaft genannt ist und dass anstelle von Kreisen beispielsweise auch Quadrate, Sterne oder andere Polygone, aber auch komplexere Objekte wie Symbole oder Wertzahlen, und auch andere Abstände der konzentrischen Figuren erzeugt werden können.

Das beschriebene Prinzip ist nicht auf Gestaltungen mit einem einzigen Linienraster beschränkt, vielmehr kann die Beschichtung eines Sicherheitselement auch zwei oder mehr Linienraster enthalten, wobei für die Liniensegmente jedes Linienrasters die Parameter 'Position des Liniensegments auf dem Prägeelement', 'Orientierung des Liniensegments auf dem Prägeelement' und 'Form des Liniensegments' unabhängig voneinander variieren können. Die Linienraster können daher insbesondere auch unterschiedliche Bewegungseffekte oder gleiche Bewegungseffekte in unterschiedliche Richtungen erzeugen. Weiter sind die Linien der Linienraster vorteilhaft mit unterschiedlichen Farben aufgebracht, um die Bewegungseffekte der Linienraster visuell zu differenzieren.

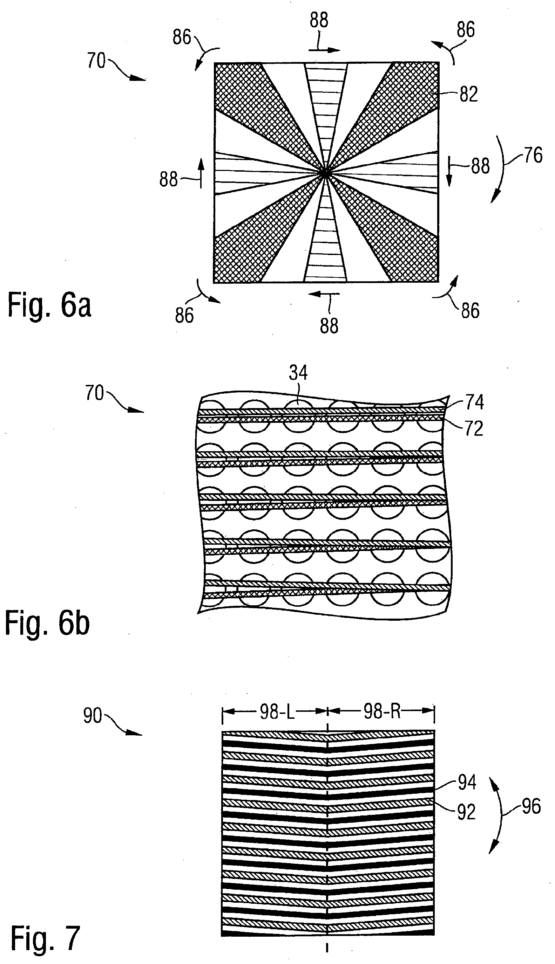

Zur Illustration zeigt Fig. 6(a) das Erscheinungsbild eines Sicherheitselements mit zwei Linienrastern bei senkrechter Betrachtung und Fig. 6(b) einen Detailausschnitt des Sicherheitselements 70.

Bei dem Sicherheitselement 70 ist die oben bereits beschriebene Prägestruktur 22 mit einer Beschichtung kombiniert, die neben der hochreflektierenden Hintergrundschicht 26 zwei Linienraster 72, 74 enthält. Das erste Linienraster 72 besteht aus roten Linien und ist durch die in Zusammenhang mit Fig. 4 bereits erläuterte Phasenfunktion

$$\phi_1(x,y) = mod(4^*arg(x+iy)/(2\pi), 1)$$

beschrieben. Das zweite Linienraster 74 besteht aus blauen Linien, die durch eine abgewandelte Phasenfunktion

$$\phi_3(x,y) = mod(4^*(\pi/4 - arg(x+iy))/(2\pi), 1)$$

beschrieben wird. Das rote Linienraster 72 erzeugt dann wie oben erläutert, im Zusammenspiel mit der Prägestruktur 22 eine rote Windmühlen-Struktur mit vier Flügeln 82, die sich beim Kippen des Sicherheitselements 70 nach unten (Bezugszeichen 76) gegen die Richtung des Uhrzeigersinns (Drehrichtung 86) zu drehen scheinen.

Die Phasenfunktion $\phi_3(x,y)$ ist gegenüber der Phasenfunktion $\phi_1(x,y)$ um 45° nach rechts gedreht und ihre Funktionswerte nehmen zudem mit zunehmendem Winkel ab. Das blaue Linienraster erzeugt daher im Zusammenspiel mit der Prägestruktur 22 eine blaue Windmühlen-Struktur mit vier Flügeln 84, die in der Ausgangsstellung bei senkrechter Betrachtung um 45° gegen die Flügel 82 der roten Windmühlen-Struktur gedreht sind, und die sich beim Kippen des Sicherheitselements 70 nach unten (Bezugszeichen 76) im Uhrzeigersinn (Drehrichtung 88) zu drehen scheinen.

Ein solches Sicherheitselement 70 mit zwei gegenläufigen farbigen Rotationseffekten ist für den Betrachter sehr auffällig und hat daher einen hohen Aufmerksamkeits- und Wiedererkennungswert.

Ein weiteres Ausführungsbeispiel eines Sicherheitselements 90 mit verschiedenfarbigen Linienrastern 92, 94 ist in Fig. 7 gezeigt, wobei der einfacheren Darstellung halber nur die Linienraster ohne die projizierten Prägeelemente dargestellt sind. Die Linienraster 92, 94 sind mit unterschiedlichen Farben, beispielsweise Rot und Blau im Siebdruck aufgedruckt. Das mit einer hochreflektierenden Hintergrundschicht 26 und den zwei Linienrastern 92, 94 versehene Sicherheitselement 90 zeigt bei senkrechter Betrachtung abwechselnd senkrechte rote und blaue Streifen, die sich beim Kippen des Sicherheitselements in Kipprichtung 96 nach rechts bzw. links zu bewegen scheinen, also ein orthoparallaktisches Bewegungsverhalten, bei dem die Bewegungsrichtung senkrecht auf der Kipprichtung steht, zeigen. Wegen der gegensätzlichen Steigung der Linien in den beiden Teilbereichen 98-L und 98-R ist die scheinbare Bewegung in den beiden Teilbereichen spiegelbildlich zueinander, so dass beispielsweise beim Kippen des Sicherheitselements 90 nach unten die senkrechten roten und blauen Streifen im Teilbereich 98-L nach links und im Teilbereich 98-R nach rechts wandern.

Die mehreren Linienraster 102,104 eines Sicherheitselements 100 können beispielsweise bei einem quadratischen Prägeraster auch senkrecht aufeinander stehen, wie in Fig. 8 illustriert. Dort erstrecken sich die Linien des Linienrasters 102 im Wesentlichen entlang der x-Achse und erzeugen daher einen Bewegungseffekt beim Kippen des Sicherheitselements 100 in Kipprichtung 106, senkrecht zur x-Achse. Die Linien des Linienrasters 104 erstrecken sich dagegen im Wesentlichen entlang der y-Achse und erzeugen daher einen Bewegungseffekt beim Kippen des Sicherheitselements 100 in Kipprichtung 108, senkrecht zur y-Achse.

Figur 9 zeigt ein konkretes Ausführungsbeispiel eines solchen Sicherheitselements 100, wobei der einfacheren Darstellung halber nur die beiden Linienraster 102,104 ohne die projizierten Prägeelemente 34 dargestellt sind. Die Linienraster 102,104 sind dabei mit verschiedenen Farben gedruckt und erzeugen beim Kippen in Kipprichtung 106 und in Kipprichtung 108 unterschiedliche Bewegungseffekte, beispielsweise einen Pumpeffekt in Kipprichtung 106 und einen Rotationseffekt in Kipprichtung 108.

Je nach der Symmetrie des Prägestrukturrasters kommen auch andere Winkelbeziehungen zwischen den Linienrastern in Frage. Beispielsweise können in einem Sechseck-Gitter drei Linienraster vorgesehen sein, die im Wesentlichen Winkel von 60° bzw. 120° zwischen sich einschließen.

Die beschriebenen Bewegungseffekte können auch mit einem statischen Effekt kombiniert sein, also mit einem Teilbereich, der an der scheinbaren Bewegung beim Kippen nicht teilnimmt und so einen ruhenden Pol in dem bewegten Umfeld darstellt. Zur Illustration zeigt Fig. 10 ein Sicherheitselement 110, das grundsätzlich wie das Sicherheitselement der Fig. 4 ausgebildet ist.

Das Linienraster 30 ist beim Sicherheitselement 110 allerdings in einem Teilbereich 112, der im Ausführungsbeispiel in Form der Ziffernfolge "50" ausgebildet ist, ausgespart, so dass dort keine Liniensegmente auf den Prägeelementen 34 liegen. Im Teilbereich 112 zeigt das Sicherheitselement 110 daher unabhängig von der Kippstellung des Sicherheitselements ein unverändertes metallisches Erscheinungsbild, so dass das Sicherheitselement 110 neben der rotierenden Windmühlen-Struktur 14 die ruhende Ziffernfolge "50" zeigt.

In einer nicht gezeigten Variante kann in dem Teilbereich 112, in dem keine Liniensegmente auf den Prägeelementen 34 vorliegen, beispielsweise zur Verstärkung des statischen Effekts zusätzlich eine Farbe, insbesondere in einem zum Farbton der Liniensegmente unterschiedlichen Farbton, aufgebracht sein.

Alternativ kann auf eine Aussparung in dem Linienraster 30 verzichtet und stattdessen das Linienraster in dem Teilbereich 112 mit einer stark deckenden Farbe überdruckt sein.

In einer weiteren nicht gezeigten Ausgestaltung kann alternativ das Prägeraster in dem Teilbereich 112 ausgespart sein, so dass den Liniensegmenten des Linienrasters in dem Teilbereich keine Prägeelemente 34 zugeordnet sind. Beim Kippen des Sicherheitselements ändert sich der visuelle Eindruck des Teilbereichs aufgrund der fehlenden räumlichen Tiefe und der dadurch fehlenden Abhängigkeit von der Betrachtungsrichtung nicht und stellt damit ebenfalls einen ruhenden Pol in dem bewegten Umfeld dar.

Bei den bisher beschriebenen Ausführungsbeispielen ist der optisch variable Effekt im Wesentlichen nur auf einer Seite des Sicherheitselements sichtbar. Die Erfindung enthält darüber hinaus jedoch auch zweiseitige Gestaltungen, die bei Betrachtung von gegenüberliegenden Seiten jeweils einen optisch variablen Effekt zeigen.

In einer ersten Gestaltungsvariante sind dazu sowohl auf der Vorder- als auch auf der Rückseite eines Datenträgers optisch variable Strukturen vorgesehen, die jeweils eine Prägestruktur und eine Beschichtung aufweisen. Die Prägestruktur der Rückseite ist dabei im selben Produktionsschritt gleichzeitig mit der Prägestruktur der Vorderseite erzeugt und ist daher deckungsgleich, aber invers zur ersten Prägestruktur auf der Vorderseite ausgebildet.

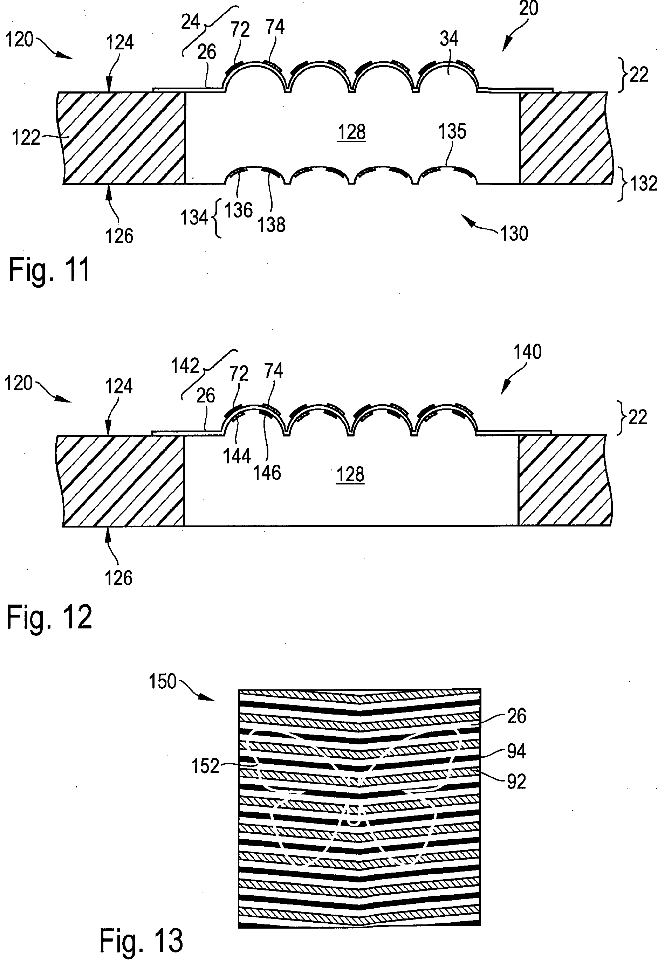

Zur näheren Erläuterung zeigt Fig. 11 einen Querschnitt einer Polymerbanknote 120, in deren Substrat 122 ein transparenter Fensterbereich 128 ausgebildet ist. Auf der Vorderseite 124 der Banknote ist eine erste optisch variable Struktur 20 der im Zusammenhang mit den Figuren 2 bis 10 bereits näher beschriebenen Art angeordnet, die durch eine Kombination einer Prägestruktur 22 und einer Beschichtung 24 gebildet ist. Die Beschichtung 24 umfasst neben der hochreflektierenden Silber-Hintergrundschicht 26 zwei Linienraster 72, 74, wie beispielsweise im Ausführungsbeispiel der Fig. 6 näher beschrieben.

Die erste optisch variable Struktur 20 der Vorderseite 124 ist mit einer auf der Rückseite 126 der Banknote angeordneten zweiten optisch variablen Struktur 130 kombiniert, die eine zweite Prägestruktur 132 und eine zweite Beschichtung 134 aufweist, welche ebenfalls durch zwei Linienraster 136, 138 der oben beschriebenen Art gebildet ist.

Die zweite Prägestruktur 132 wurde dabei gleichzeitig mit der ersten Prägestruktur 22 im selben Produktionsschritt erzeugt, im Ausführungsbeispiel etwa durch einen Blindprägeschritt. Die Vorderseite der Banknote ist dabei die im Prägeschritt der Prägeplatte zugewandte Seite des Substrats 122. Im Ausführungsbeispiel der Fig. 11 werden neben den Prägestrukturen 22 auf der Vorderseite auch die produktionsbedingt erzeugten Deformationen der Rückseite als Prägestrukturen 132 genutzt. Die Prägestrukturen 132 weisen eine zu den Prägestrukturen 22 der Vorderseite inverse Geometrie auf, das heißt, die Erhebungen und Vertiefungen sind deckungsgleich und mit gleichem Rapport, allerdings mit einer Vertauschung der Rollen der Erhebungen und Vertiefungen angeordnet. Aufgrund des verwendeten Gegendrucktuchs weisen die Rückseitenprägestrukturen 132 gegenüber den Vorderseitenprägestrukturen 22 eine erhöhte Rauigkeit auf.

Die Positionen der Liniensegmente der Rückseiten-Linienraster 136,138 sind durch eine Phasenfunktion $\phi_{RS}(x,y)$ gegeben, für die die oben gemachten Ausführungen zu den Phasenfunktionen der Vorderseiten-Linienraster ebenfalls gelten. Insbesondere sind die Beschichtung 134 und die Prägestruktur 132 durch die übereinstimmenden Werte ihrer Rasterweiten so miteinander kombiniert, dass im Wesentlichen in jeder Vertiefung 135 ein Liniensegment einer Linie aus den Linienrastern 136,138 liegt.

Die auf der Vorderseite 124 des Substrats 122 liegenden Erhebungen 34 wirken wegen der Beschichtung mit der hochreflektierenden Silber-Hintergrundschicht 26 bei Betrachtung von der Rückseite 126 her als kleine Hohlspiegel. Die Krümmung der Erhebungen 34 ist im Ausführungsbeispiel so auf die Dicke des Substrats 122 abgestimmt, dass der Fokus der kleinen Hohlspiegel im Bereich der Linien der Linienraster 136,138 liegt.

Die Linienraster 72, 74 der Vorderseite und die Linienraster 136,138 der Rückseite können mit ihren Phasen-funktionen $\phi_{VS}(x,y)$ bzw. $\phi_{RS}(x,y)$ gleiche oder verschiedenartige Bewegungseffekte erzeugen.

Die hochreflektierende Hintergrundschicht 26 kann insbesondere durch eine Siebdruckschicht oder eine Metallisierung gebildet sein. Die Hintergrundschicht hat bei dieser Ausgestaltung eine Doppelfunktion, da sie für beide Gruppen von Linienmustern 72, 74 bzw. 136,138 jeweils als reflektierender Hintergrund wirkt.

Bei der Herstellung einer Gestaltung nach Fig. 11 wird das Substrat 122 zunächst mit der hochreflektierenden Hintergrundschicht 26 versehen und das so vorbereitete Substrat dann beidseitig mit den Linienmustern 72, 74 bzw. 136,138 bedruckt. Die Bedruckung kann vorteilhaft im Simultanverfahren oder auch in zwei getrennten Druckschritten erfolgen. Anschließend wird das Substrat 122 blindverprägt, wodurch gleichzeitig die deckungsgleichen Prägestrukturen 22,132 auf Vorder- und Rückseite erzeugt und damit die erste und zweite optisch variable Struktur 20,130 vervollständigt werden. Die Prägung erfolgt mit Vorteil mit der Prägeplatte auf der Seite der Hintergrundschicht 26, sie kann aber grundsätzlich auch auf der gegenüberliegenden Seite erfolgen.

Eine andere, in Fig. 12 illustrierte zweiseitige Gestaltung setzt in einem transparenten Fensterbereich 128 einer Banknote 120 nur eine optisch variable Struktur 140 auf der Vorderseite 124 der Banknote ein. Die Rückseite 126 kann Deformationen aufweisen, wie etwa in Fig. 2 gezeigt, diese werden in dieser Ausgestaltung jedoch nicht als Prägestrukturen einer optisch variablen Rückseitenstruktur genutzt. Die optisch variable Struktur 140 ist durch eine Kombination einer Prägestruktur 22 und einer Beschichtung 142 gebildet, wobei die Beschichtung 142 neben einer hochreflektierenden Silber-Hintergrundschicht 26 zwei Gruppen von Linienrastern aufweist. Eine erste Gruppe von Linienrastern 72, 74 ist wie in den oben beschriebenen Ausführungsbeispielen auf der Hintergrundschicht 26 aufgebracht, während eine zweite Gruppe von Linienrastern 144,146 unterhalb der Hintergrundschicht 26 angeordnet ist.

Bei dieser Gestaltung nutzen beide Gruppen von Linienrastern dieselbe Prägestruktur 22, wobei die Erhebungen 34 für die auf der Hintergrundschicht 26 angeordneten Linienraster 72, 74 und bei Betrachtung von der Vorderseite als kleine Wölbspiegel wirken, während sie für die unterhalb der Hintergrundschicht 26 angeordneten Linienraster 144,146 und bei Betrachtung von der Rückseite als kleine Hohlspiegel wirken. Die Linienraster 72, 74 auf der Hintergrundschicht und die Linienraster 144,146 unterhalb der Hintergrundschicht können mit ihren Phasenfunktion $\phi_{auf}(x,y)$ bzw. $\phi_{unter}(x,y)$ gleiche oder verschiedenartige Bewegungseffekte erzeugen.

Bei den bisher beschriebenen Gestaltungen ist durch die kontrastierende oder sogar reflektierende Hintergrundschicht zumindest ein Bewegungseffekt in Aufsicht auf das Sicherheitselement sichtbar. Bei den zweiseitigen Gestaltungen ist bei Betrachtung von gegenüberliegenden Seiten jeweils ein Bewegungseffekt in Aufsicht sichtbar, wobei die Bewegungseffekte der gegenüberliegenden Seiten gleich oder unterschiedlich sein können. In allen Gestaltungen könnten diese Aufsichtsbewegungseffekte mit einer Durchsichtsinformation kombiniert werden, indem die Hintergrundschicht mit punkt- oder linienförmigen Aussparungen perforiert oder auch großflächig ausgespart wird. Sind zwei Hintergrundschichten vorgesehen, sind die Aussparungen in mindestens einer der Hintergrundschichten vorgesehen. Bei opaken Hintergrundschichten kann es notwendig sein, beide Hintergrundschichten überdeckend auszusparen, um eine Durchsichtsinformation zu erzeugen.

Figur 13 zeigt zur Illustration ein Sicherheitselement 150 mit einer hochreflektierenden Hintergrundschicht 26 und zwei verschiedenfarbigen Linienrastern 92, 94, wobei der einfacheren Darstellung halber die projizierten Prägeelemente nicht dargestellt sind. Durch Einwirkung von Laserstrahlung ist eine Konturlinie 152, im Ausführungsbeispiel in Form eines Schmetterlingsmotivs, in die Hintergrundschicht 26 und die darüber liegenden Linienraster 92, 94 eingebracht. Das Sicherheitselement 150 zeigt daher neben dem oben beschriebenen Bewegungseffekt in Durchsicht die Konturlinie 152 des Schmetterlingsmotivs.

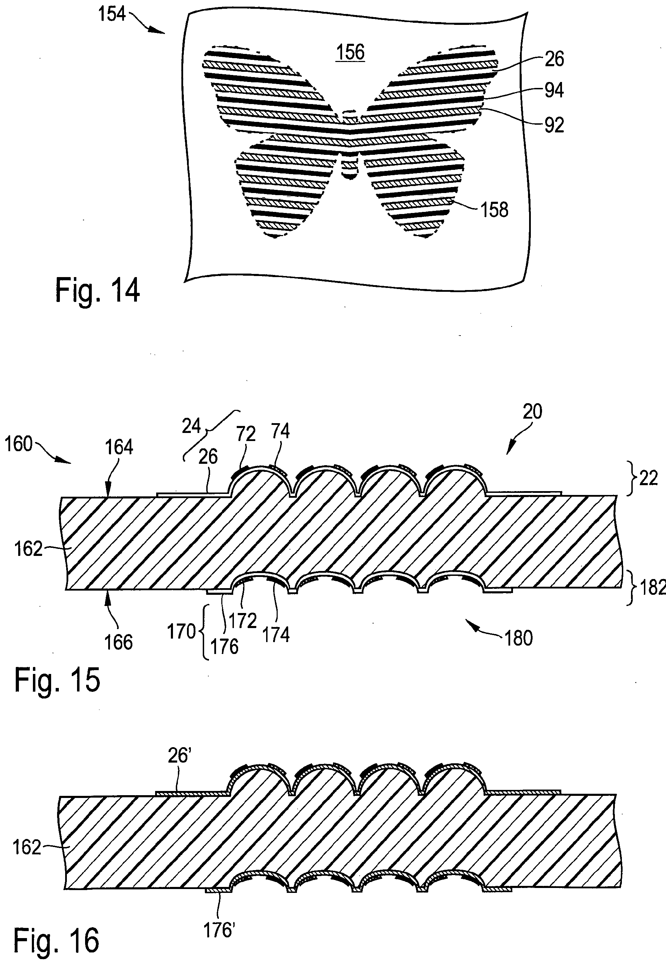

Die Hintergrundschicht 26 kann auch großflächig durch Laserbeaufschlagung entfernt werden, wie in der Abwandlung der Fig. 14 illustriert. Bei dem dort gezeigten Sicherheitselement 154 wurden die hochreflektierende Hintergrundschicht 26 und die Linienraster 92, 94 zunächst über die gesamte Fläche des Sicherheitselements 154 aufgebracht und anschließend im Bereich 156 außerhalb des Schmetterlingsmotivs 158 durch Laserbeaufschlagung entfernt. Bilden beispielsweise die Hintergrundschicht 26 und die Linienraster 92, 94 zusammen mit der in Fig. 14 nicht dargestellten Prägestruktur eine erste optisch variable Struktur, die nach Fig. 11 mit einer zweiten optisch variablen Struktur auf der gegenüberliegenden Substratseite kombiniert ist, so zeigt das zweiseitige Sicherheitselement in Aufsicht jeweils einen farbigen Schmetterling 158 mit farbigen Flügeln und einem Bewegungseffekt der oben beschrieben Art. Beispielsweise können die Linienraster auf der Vorderseite mit den Farben Gelb und Blau und auf der Rückseite mit den Farben Rot und Grün gedruckt sein, so dass sich die Schmetterlingsflügel je nach Betrachtungswinkel und Betrachtungsseite mit unterschiedlichen Farbenverläufen zeigen.

Bei einer zweiseitigen Gestaltung können in einer vorteilhaften Ausgestaltung durch die Laserbeaufschlagung nur die Hintergrundschicht 26 und die Linienraster 92, 94 der Vorderseite, nicht aber die Beschichtung der Rückseite entfernt werden.

Anstatt die Hintergrundschicht 26 durch Laserbeaufschlagung großflächig zu entfernen, kann die Hintergrundschicht 26 auch in einer gewünschten Form, beispielsweise in Form des Schmetterlingsmotivs 158 der Fig. 14 aufgebracht werden. Diese Vorgehensweise eignet sich insbesondere dann, wenn größere Flächenbereiche zu demetallisieren wären, hat allerdings den Nachteil, dass Passerschwankungen zwischen der aufgedruckten oder als Folienelement aufgebrachten Hintergrundschicht 26 und den aufgedruckten Linienrastern 92, 94 auftreten können.

Die Hintergrundschicht 26 kann auch mit einer geringeren Flächendeckung als 100%, beispielsweise 50%, in Form eines feinen Linien- oder Punktrasters aufgebracht oder metallisiert werden, um eine teildurchlässige Hintergrundschicht und einen teildurchlässigen Fensterbereich zu erhalten.

Zweiseitige Gestaltungen können nicht nur in transparenten, sondern auch in opaken Bereichen eines Datenträgers verwirklicht werden. Figur 15 zeigt hierzu als Ausführungsbeispiel eine Banknote 160 mit einem opaken Papiersubstrat 162. Auf der Vorderseite 164 der Banknote ist eine erste optisch variable Struktur 20 der oben beschriebenen Art angeordnet, die durch eine Kombination einer Prägestruktur 22 und einer Beschichtung 24 gebildet ist. Die Beschichtung 24 umfasst neben der hochreflektierenden Silber-Hintergrundschicht 26 zwei Linienraster 72, 74, wie im Ausführungsbeispiel der Fig. 6 genauer beschrieben.

Die erste optisch variable Struktur 20 der Vorderseite 164 ist mit einer auf der Rückseite 166 der Banknote angeordneten zweiten optisch variablen Struktur 180 kombiniert, die eine zweite Prägestruktur 182 und eine zweite Beschichtung 170 aufweist, welche neben einer hochreflektierenden Silber-Hintergrundschicht 176 zwei Linienraster 172,174 aufweist.

Die zweite Prägestruktur 182 wurde, wie bei dem Ausführungsbeispiel der Fig. 11, im selben Produktionsschritt gleichzeitig mit der ersten Prägestruktur 22 erzeugt, beispielsweise durch einen Blindprägeschritt, so dass die bei Fig. 11 gemachten Ausführungen zu den Deformationen der Rückseite und der zueinander inversen Geometrie der Prägestrukturen 182 und 22 auch für das Ausführungsbeispiel der Fig. 15 gelten.

Die Hintergrundschichten 26,176 können durch zweimaligen Siebdruck auf Vorder- und Rückseite des Banknotensubstrats 162 erzeugt werden, oder auch durch Aufbringen eines Offsetsilbers, eine Applikation eines Silberpatches oder eines versilberten Laminatstreifens. Auch eine Kombination der genannten Verfahren kommt in Frage. Die Silber-Hintergrundschichten 26, 176 können gleiche oder unterschiedliche Form, Geometrie oder Feinstruktur aufweisen.

Nach dem Aufbringen der Hintergrundschichten wird das so vorbereitete Substrat beidseitig mit den Linienmustern 72, 74 bzw. 172, 174 bedruckt. Die Bedruckung kann wieder vorteilhaft im Simultanverfahren oder auch in zwei getrennten Druckschritten erfolgen. Anschließend wird das Substrat 162 blindverprägt, wodurch gleichzeitig die deckungsgleichen Prägestrukturen 22,182 auf Vorder- und Rückseite erzeugt und damit die beiden optisch variablen Strukturen 20,180 vervollständigt werden. Wie bei den anderen zweiseitigen Gestaltungen können die Linienraster 72, 74 der Vorderseite und die Linienraster 172,174 der Rückseite mit ihren Phasenfunktion $\phi_{VS}$ (x,y) bzw. $\phi_{RS}$(x,y) gleiche oder verschiedenartige Bewegungseffekte erzeugen.

Mit Bezug auf die Abwandlung der Fig. 16 kann eine oder beide der Hintergrundschichten 26', 176' auch in Form einer nicht hochreflektierenden Schicht ausgebildet sein. Als zu den Linienrastern kontrastierende Hintergrundschicht kommt dabei insbesondere die weiße Substratoberfläche eines Banknotenpapiers, die farbige Oberfläche eines eingefärbten Substrats, eine im Siebdruck mit Pigmenten (z. B. Rutil - $TiO_2$) oder Füllstoffen auf die Substratoberfläche aufgebrachte glänzende Haftvermittlungsschicht oder eine auf das Substrat 162 aufgebrachte einfarbige Druckschicht in Frage. So ist etwa im Ausführungsbeispiel der Fig. 16 die Hintergrundschicht 26' durch eine einfarbige, beispielsweise rote Druckschicht, und die Hintergrundschicht 176' durch eine einfarbige, beispielsweise gelbe Druckschicht gebildet. Eine oder beide der Hintergrundschichten 26', 176' können auch durch die weiße Oberfläche des Banknotensubstrats 162 selbst gebildet sein.

Die Ausbildung der Hintergrundschicht als nicht oder nur in geringem Umfang reflektierend und lediglich zu den Linienrastern kontrastierend kommt selbstverständlich auch für Gestaltungen mit nur einer Hintergrundschicht, wie etwa in Fig. 2 oder 12 gezeigt, in Betracht.

In einer Gestaltungsvariante wird bei dem Linienraster mit Vorteil zumindest eine Lumineszenzfarbe, vorzugsweise eine Fluoreszenzfarbe verwendet. Dabei werden Lumineszenzfarben vorteilhaft zu einer bis drei, vorzugsweise zwei der verwendeten Druckfarben hinzugefügt. Das Sicherheitselement kann dann mit UV-Licht verifiziert werden, wobei der Betrachter beispielsweise beim Hin- und Herschwenken einer UV-Handlampe eine farbige Bewegung im Sicherheitselement wahrnimmt, ohne dieses selbst zu bewegen.

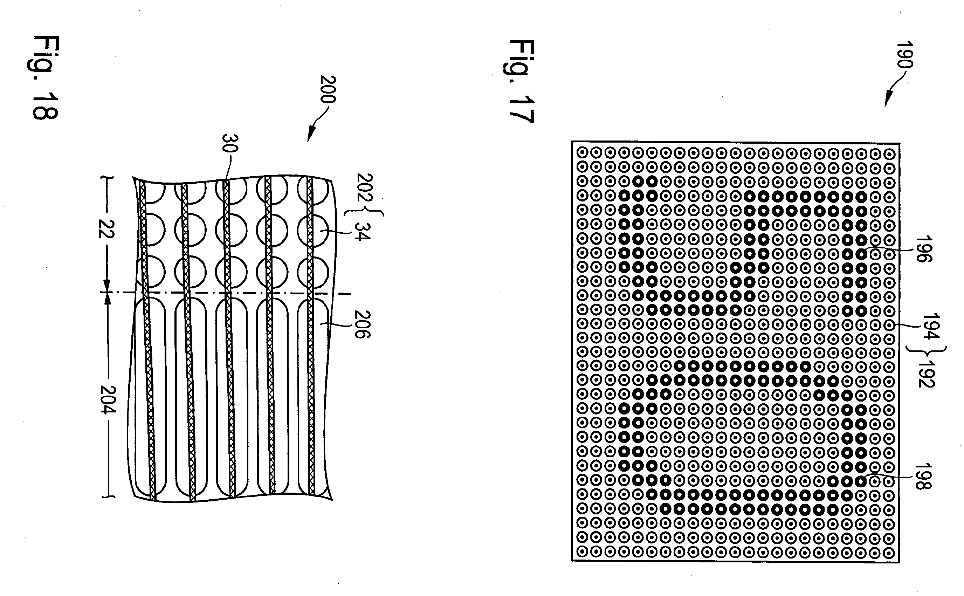

Besonders fälschungssichere Sicherheitselemente können weiter durch besondere Ausgestaltungen der Prägestruktur erhalten werden. Figur 17 zeigt hierzu in schematischer Darstellung nur die Prägestruktur 192 eines Sicherheitselements 190, wobei die Prägestruktur 192 als Prägeelemente sowohl gestauchte halbkugelförmige Erhebungen 194 als auch gestauchte halbkugelförmige Vertiefungen 196 enthält. Die erhabenen und vertieften Prägeelemente 194,196 sind in Form eines Motivs 198, im Ausführungsbeispiel der Ziffernfolge "50" angeordnet. Wird die Prägestruktur 192 mit einer Beschichtung der oben beschriebenen Art kombiniert, so entsteht ein Bewegungseffekt, der innerhalb des Motivs 198 wegen der entgegengesetzten optischen Wirkung der erhabenen und vertieften Prägeelemente modifiziert ist, so dass das Motiv 198 zumindest aus bestimmten Betrachtungsrichtungen deutlich sichtbar in Erscheinung tritt. Insbesondere kann das Motiv 198 beispielsweise bei senkrechter Aufsicht nicht zu erkennen sein, während es bei flachem Betrachtungswinkel eine zur Umgebung invertierte Farbabfolge zeigt. Ein Prägewerkzeug zur Erzeugung solcher Prägestrukturen kann beispielsweise durch Laserbearbeitung einer Prägeplatte erzeugt werden.

Figur 18 zeigt eine Aufsicht auf einen Ausschnitt eines Sicherheitselements 200, das grundsätzlich wie das Sicherheitselement 12 der Figuren 2 und 3 ausgestaltet ist. Allerdings weist die Prägestruktur 202 des Sicherheitselements 200 neben dem oben beschriebenen zweidimensionalen Raster 22 aus gestauchten halbkugelförmigen Erhebungen 34 auch einen Teilbereich 204 mit langgestreckten, erhabenen Prägeelementen 206 auf. Die Prägeelemente 206 können beispielsweise elliptisch, oval oder rinnenförmig ausgebildet sein. Im Ausführungsbeispiel liegen die langgestreckten Prägeelemente 206 mit ihrer Längsrichtung parallel zu x-Achse und ihrer Querrichtung parallel zur y-Achse. Die unterschiedliche, langgestreckte Form der Prägeelemente 206 führt im Teilbereich 204 beim Verkippen in Nord-Süd Richtung (Kippung um die x-Achse) zwar nicht zu wahrnehmbaren Abweichungen in dem durch das Linienraster 30 erzeugten Erscheinungsbild, die deutlich unterschiedliche Form der Prägeelemente 206 ist aber beispielsweise mit Hilfe eines Mikroskops leicht erkennbar und kann dadurch als weiteres Echtheitsmerkmal genutzt werden. Solche Kombinationen von sphärischen und langgestreckten Prägeelementen verleihen einem Sicherheitselement 200 insbesondere auch dadurch zusätzlichen Fälschungsschutz, dass, wie weiter oben genauer erläutert, entsprechende Kombinations-Linsenfolien kommerziell nicht erhältlich sind.

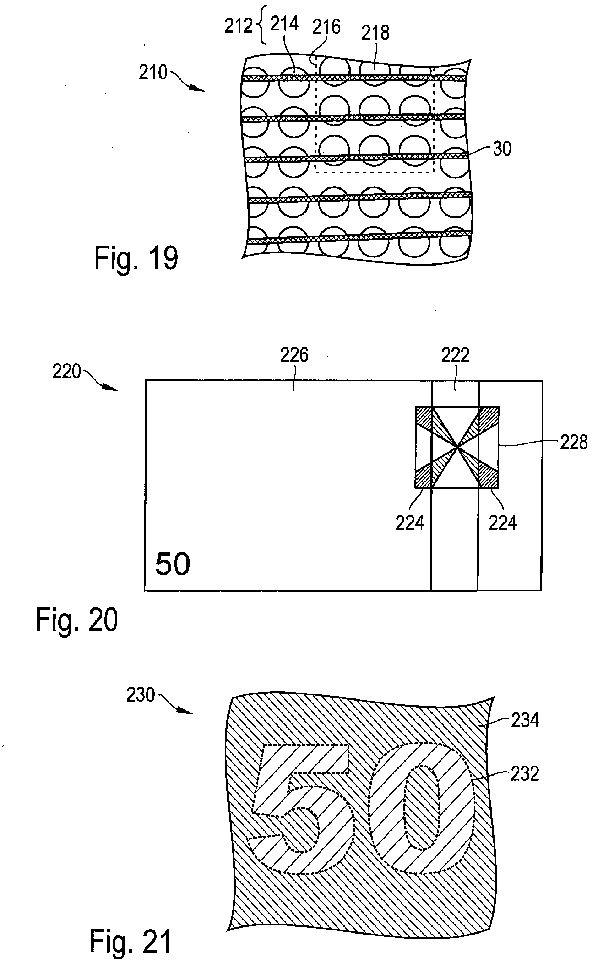

Figur 19 zeigt als weiteres Ausführungsbeispiel ein Sicherheitselement 210, das grundsätzlich wie das Sicherheitselement 12 der Figuren 2 und 3 ausgestaltet ist, dessen Prägestruktur 212 jedoch neben dem regelmäßigen zweidimensionalen Raster 22 von Prägeelementen 214 auch einen Teilbereich 216 mit gegen das Raster 22 versetzten Prägeelementen 218 umfasst. Im Ausführungsbeispiel weisen die versetzten Prägeelemente 218 dieselbe Form wie die Prägeelemente 214 auf, im Allgemeinen können die versetzten Prägeelemente aber auch eine andere Form oder auch eine andere Abmessung bzw. Rasterweite aufweisen. Durch den Phasenversatz zeigt der Teilbereich 216 ein von der Umgebung abweichendes Erscheinungsbild und wird in dem Bewegungsmerkmal daher als Zusatzinformation sichtbar. Werden die Prägeelemente 218 gerade um die Hälfte der Periodenlänge des Prägeelement-Rasters versetzt, so ergibt sich ein invertiertes farbliches Erscheinungsbild des Teilbereichs 216 und damit eine leicht erkennbare Information im Sicherheitselement 210.

Die oben genannten Ausgestaltungen können mit Bezug auf Fig. 20 auch vorteilhaft kombiniert werden, um eine Absicherung eines Folienelements 222 auf einer Banknote 220 zu erreichen. Das optisch variable Sicherheitselement 228 ist dabei so ausgebildet, dass es neben einem Teilbereich des Folienelements 222 auch die an das Folienelement 222 angrenzenden Bereiche 224 des Banknotensubstrats 226 überdeckt. Dazu ist auf dem Folienelement 222 eine silbrig glänzende Hintergrundschicht vorgesehen, während die kontrastierende Hintergrundschicht in den an das Folienelement angrenzenden Bereichen 224 keine glänzende Hintergrundschicht ist, sondern beispielsweise durch die weiße Substratoberfläche oder eine farbige Druckschicht gebildet ist. Weiter ist zumindest ein Linienraster vorgesehen, das sich sowohl über das Folienelement 222 als auch die angrenzenden Bereiche 224 erstreckt. Das Banknotensubstrat 226 ist zusammen mit dem aufgebrachten Folienelement blindgeprägt, um eine durchgehende Prägestruktur zu erzeugen. Das Folienelement 222 ist dadurch sicher an das Banknotensubstrat 226 gebunden, da eine Manipulation des Folienelements wegen der Erstreckung des Sicherheitselements 228 in die angrenzenden Bereiche 224 sofort auffällt.

Das Sicherheitselement 228 kann auch im Bereich einer von dem Folienelement 222 abgedeckten, durchgehenden Öffnung der Banknote 220 angeordnet sein. In diesem Fall ist das Sicherheitselement 228 vorteilhaft mit einer zweiseitigen Gestaltung etwa nach Fig. 11, 12,15 oder 16 ausgebildet, so dass im Bereich der Öffnung auch bei Rückseitenbetrachtung ein Bewegungseffekt sichtbar ist.

Die Beschichtung der beschriebenen Sicherheitselemente kann auch mehrere Teilbereiche aufweisen, in denen die Linienraster unterschiedliche Bewegungseffekte erzeugen. Mit Bezug auf Fig. 21 weist das Sicherheitselement 230 einen ersten Teilbereich 232 in Form der Wertzahl "50" auf, dessen Linienraster einen Kippeffekt erzeugt. Der umgebende Teilbereich 234 ist dagegen mit einem Linienraster mit einem unterschiedlichen Bewegungseffekt, beispielsweise einem Rotationseffekt nach Figur 4 belegt. Beim Kippen des Sicherheitselements 230 ist die Wertzahl "50" daher je nach Betrachtungswinkel sichtbar oder nicht sichtbar, während die Umgebung 236 der Wertzahl rotierende Flügel zeigt.

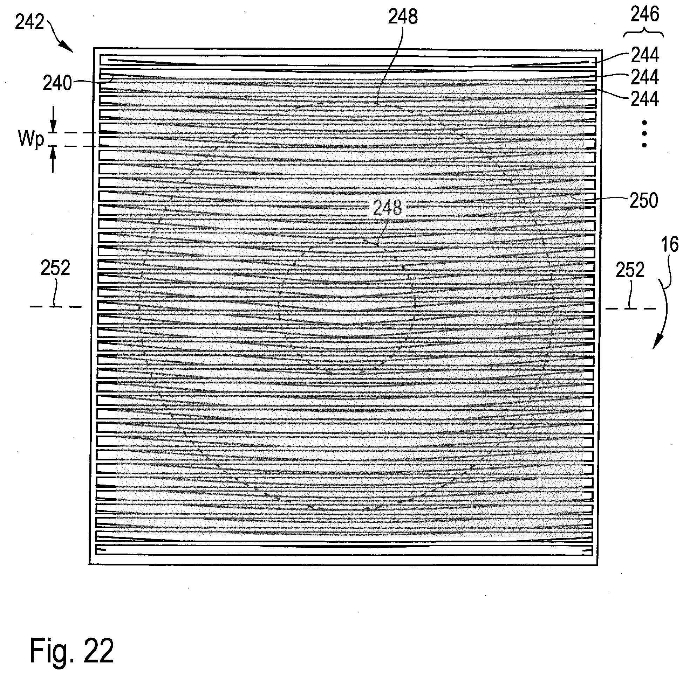

Neben zweidimensionalen Rastern können die beschriebenen Sicherheitselemente auch Prägestrukturen mit einem eindimensionalen Raster enthalten. Figur 22 illustriert dies am Beispiel eines Sicherheitselements 242, das ähnlich wie das Ausführungsbeispiel der Fig. 5 einen Pumpeffekt zeigt. Konkret zeigt Fig. 22 in zweidimensionaler Projektion einen Ausschnitt auf das zugehörige Linienraster 240 des Sicherheitselements 242 mit eine Vielzahl langgestreckter erhabener Prägeelemente 244, die zueinander im Wesentlichen parallel in einem eindimensionalen Raster 246 der Rasterweite $W_P$ angeordnet sind.

Das zugehörige Linienraster 240 besteht aus einer Vielzahl von Linien 250, die gemäß der bei Fig. 5 angegebenen Phasenfunktion $\phi_2$ (x,y) erhalten sind. Wie in Fig. 22 illustriert, ist die Beschichtung mit dem Linienraster 240 so mit der Prägestruktur der Prägeelemente 244 kombiniert, dass im Wesentlichen auf jedem langgestreckten Prägeelement 244 zumindest eine Linie 250 des Linienrasters 240 liegt. Dabei beschreibt die Phasenfunktion $\phi_2$ (x,y) für jeden Punkt (x,y) die lokale Position und Orientierung der Linie 250 auf dem Prägeelement 244. Wie in Fig. 22 weiter erkennbar, kann sich eine Linie 250 aufgrund ihres konkreten Verlaufs über mehrere der langgestreckten Prägeelemente 244 erstrecken, so dass über jedem dieser langgestreckten Prägeelemente 244 jeweils nur ein Teilbereich dieser Linie 250 liegt.

Ähnlich wie bei dem Ausführungsbeispiel der Fig. 5 treten bei senkrechter Betrachtung des Sicherheitselements 242 die in der Mitte ($\phi_2$= 0.5) der erhabenen Prägeelemente 244 liegenden Teile der Linien 250 am stärksten in Erscheinung, während die auf den oberen und unteren Flanken der Prägeelemente 244 liegenden Linienteile visuell zurücktreten. Wie in Fig. 22 zu erkennen, sind bei der Phasenfunktion $\phi_2$ die in der Mitte der Prägeelemente 244 liegenden Linienteile im Wesentlichen auf konzentrischen Kreisen 248 mit Radien von 5* $W_p$, 15* $W_p$, 25* $W_p$, etc. angeordnet. Bei senkrechter Betrachtung zeigt das Sicherheitselement 242 daher eine Reihe konzentrischer Kreise mit den genannten Durchmessern.

Wird das Sicherheitselement 242 nun in Kipprichtung 16 nach unten gekippt, also eine Kippung um eine parallel zu den langgestreckten Prägeelementen 244 liegende Achse 252 durchgeführt, so geraten die zunächst am höchsten Punkt liegenden Linienteile aus Sicht des Betrachters an die unteren Flanken der Prägeelemente 244 und treten daher visuell zurück, während die zuvor an den oberen Flanken liegenden Linienteile an den höchsten Punkt gekippt werden und das visuelle Erscheinungsbild dominieren. Mit anderen Worten, die Linienteile, die zuvor sichtbar waren, erscheinen dem Betrachter nun zunehmend weniger dominant, wohingegen die zuvor an den oberen Flanken liegenden Linienteile durch die Verkippung 16 deutlicher hervortreten. Wie in Fig. 22 zu erkennen, liegen die zugehörigen Bereiche der Prägeelemente 244 auf etwas größeren konzentrischen Kreisen, beispielsweise mit Radien 7* $W_p$, 17* $W_p$, etc., so dass sich durch die Verkippung 16 die konzentrischen Kreise 248 zu vergrößern scheinen. Entsprechend ergibt sich durch eine Verkippung des Sicherheitselements 242 in Gegenrichtung eine scheinbare Verkleinerung der konzentrischen Kreise 248, so dass durch ein Hin- und Herkippen des Sicherheitselements 242 in Kipprichtung 16 der gewünschte Pumpeffekt entsteht.

Die Linien 250 verlaufen für einen eindrucksvollen Bewegungseffekt im Wesentlichen parallel zu der Längsrichtung 252 der langgestreckten Prägeelemente 244. Der Winkel, den die Linien 250 mit den langgestreckten Prägeelementen 244 einschließen, im Ausführungsbeispiel beispielsweise weniger als 5°, wirkt sich dabei insbesondere auf die Geschwindigkeit des Bewegungseffekts aus. So verringern (bzw. vergrößern) sich in dem Fall, dass die Linien 250 mit den langgestreckten Prägeelementen 244 einen gegenüber dem Ausführungsbeispiel der Fig. 22 größeren (oder kleineren) Winkel einschließen, entsprechend die Radien der konzentrischen Kreise 248 und der durch Hin- und Herkippen des Sicherheitselements 252 in Kipprichtung 16 entstehende Pumpeffekt erfährt eine Beschleunigung (bzw. Verlangsamung).

Wegen der langgestreckten und damit stark asymmetrischen Form der Prägeelemente 244 und des Linienrasters 240 tritt der beschriebene Bewegungseffekt nur beim Kippen um die Achse 252 parallel zur Längsachse der Prägeelemente auf, während beim Kippen um eine dazu senkrechte Achse kein Bewegungseffekt entsteht.

Die gezeigten Ausführungsbeispiele sind nicht abschließend. Insbesondere sind Kombinationen des gezeigten Sicherheitselements mit anderen Sicherheitsmerkmalen vorgesehen. Beispielsweise kann das Sicherheitselement auf einem Sicherheitsdokument mit weiteren optisch variablen Elementen kombiniert werden, die dem Betrachter unter unterschiedlichen Betrachtungswinkeln einen unterschiedlichen Bildeindruck vermitteln und je nach Betrachtungswinkel einen anderen Farb- oder Helligkeitseindruck und/oder ein anderes graphisches Motiv zeigen.

Besonders vorteilhaft ist es, wenn das gezeigte Sicherheitselement die Bewegungsrichtung und/oder die Formen des oder der weiteren optisch variablen Element(e) aufgreift. So kann z.B. durch einen Hologrammstreifen beim Kippen eine Bewegung eines Motivs in einer bestimmten Richtung dargestellt werden, die durch das erfindungsgemäße Sicherheitselement aufgegriffen bzw. in ähnlicher Weise wiedergegeben wird. Auch ein Verstärkung des Bewegungseindrucks kann durch ein weitere Sicherheitsmerkmal erzielt werden, beispielsweise über eine zum erfindungsgemäßen Sicherheitselement gegenläufige Bewegung des durch das Hologramm dargestellten Motivs.

Bezugszeichenliste

| | |
|---|---|
| 10 | Banknote |

| 12 | Sicherheitselement |
| 14 | Flügelstruktur |
| 16 | Verkippung |
| 18 | Rotationsbewegung |
| 20 | optisch variable Struktur |
| 22 | Prägestruktur |
| 24 | Beschichtung |
| 26 | hochreflektierende Hintergrundschicht |
| 26' | einfarbige Hintergrundschicht |
| 28 | Banknotensubstrat |
| 30 | Linienraster |
| 32 | Linien |
| 34 | Prägeelemente |
| 36 | Liniensegmente |
| 40, 42, 44 | Betrachtungsrichtungen |
| 50 | Diagonalen |
| 52 | gedrehte Diagonalen |
| 60 | Linienraster |
| 62 | Sicherheitselement |
| 64 | konzentrische Kreise |
| 70 | Sicherheitselement |
| 72, 74 | Linienraster |
| 76 | Kipprichtung |
| 82, 84 | Flügel |
| 86, 88 | Drehrichtungen |
| 90 | Sicherheitselement |
| 92, 94 | Linienraster |
| 96 | Kipprichtung |
| 98-L, 98-R | Teilbereiche |
| 100 | Sicherheitselement |
| 102, 104 | Linienraster |
| 106, 108 | Kipprichtungen |
| 110 | Sicherheitselement |
| 112 | Teilbereich |
| 120 | Polymerbanknote |
| 122 | Substrat |
| 124 | Vorderseite |
| 126 | Rückseite |
| 128 | Fensterbereich |
| 130 | zweite optisch variable Struktur |
| 132 | zweite Prägestruktur |
| 134 | zweite Beschichtung |
| 135 | Vertiefung |
| 136, 138 | Linienraster |
| 140 | optisch variable Struktur |
| 142 | Beschichtung |
| 144, 146 | Linienraster |
| 150 | Sicherheitselement |
| 152 | Konturlinie |
| 154 | Sicherheitselement |
| 156 | Bereich außerhalb des Schmetterlingsmotivs |
| 158 | Schmetterlingsmotiv |
| 160 | Banknote |
| 162 | Papiersubstrat |
| 164 | Vorderseite |
| 166 | Rückseite |
| 170 | zweite Beschichtung |
| 172, 174 | Linienraster |

| 176, 176' | Hintergrundschicht |
| 180 | zweite optisch variable Struktur |
| 182 | zweite Prägestruktur |
| 190 | Sicherheitselement |
| 192 | Prägestruktur |
| 194 | Erhebungen |
| 196 | Vertiefungen |
| 198 | Motiv |
| 200 | Sicherheitselement |
| 202 | Prägestruktur |
| 204 | Teilbereich |
| 206 | langgestreckte Prägeelemente |
| 210 | Sicherheitselement |
| 212 | Prägestruktur |
| 214 | Prägeelemente |
| 216 | Teilbereich |
| 218 | versetzte Prägeelemente |
| 220 | Banknote |
| 222 | Folienelement |
| 224 | angrenzende Bereiche |
| 226 | Banknotensubstrat |
| 228 | optisch variables Sicherheitselement |
| 230 | Sicherheitselement |
| 232, 234 | Teilbereiche |
| 240 | Linienraster |
| 242 | Sicherheitselement |
| 244 | langgestreckte erhabene Prägeelemente |
| 246 | eindimensionales Raster |
| 248 | konzentrische Kreise |
| 250 | Linien |
| 252 | Achse |

**Patentansprüche**

1. Optisch variables Sicherheitselement (12) zur Absicherung von Wertgegenständen (10), mit einem Substrat (28) mit gegenüberliegenden ersten und zweiten Hauptflächen und einer auf der ersten Hauptfläche angeordneten optisch variablen Struktur (20), die eine Prägestruktur (22) und eine Beschichtung (24) aufweist, wobei

   - die Beschichtung zumindest ein aufgedrucktes Linienraster (30) und eine zu dem Linienraster kontrastierende Hintergrundschicht (26) umfasst, wobei die kontrastierende Hintergrundschicht durch eine hochreflektierende Hintergrundschicht oder eine glänzende Hintergrundschicht gebildet ist,
   - die Prägestruktur ein zweidimensionales Raster erhabener und/oder vertiefter Prägeelemente (34) umfasst,
   - die Beschichtung und die Prägestruktur so kombiniert sind, dass im Wesentlichen auf jedem Prägeelement zumindest ein Liniensegment (36) einer Linie (32) des Linienrasters liegt, und
   - zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster beim Kippen des Sicherheitselements ein Bewegungseffekt, insbesondere ein Pump- oder Rotationseffekt entsteht.

2. Sicherheitselement nach Anspruch 1, **dadurch gekennzeichnet, dass** die kontrastierende Hintergrundschicht durch eine silbrig, gold- oder kupferfarben glänzende Folie oder eine silber-, gold- oder kupferfarbene Druckschicht gebildet ist.

3. Sicherheitselement nach Anspruch 1, **dadurch gekennzeichnet, dass** die kontrastierende Hintergrundschicht durch eine glänzende Hintergrundschicht gebildet ist und das Linienraster auf der kontrastierenden Hintergrundschicht mit hoher Flächendichte ausgebildet ist.

**4.** Sicherheitselement nach wenigstens einem der Ansprüche 1 bis 3, **dadurch gekennzeichnet, dass** das Substrat zumindest in dem Bereich der auf der ersten Hauptfläche angeordneten optisch variablen Struktur transparent oder transluzent ist.

**5.** Sicherheitselement nach Anspruch 4, **dadurch gekennzeichnet, dass** die Beschichtung zumindest ein weiteres, unterhalb der Hintergrundschicht angeordnetes und zu der Hintergrundschicht kontrastierendes Linienraster umfasst, wobei

- im Wesentlichen auf jedem Prägeelement zumindest ein Liniensegment einer Linie des weiteren Linienrasters liegt, und
- für das weitere Linienraster zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das weitere Linienraster beim Kippen des Sicherheitselements ein Bewegungseffekt, insbesondere ein Pump- oder Rotationseffekt entsteht.

**6.** Sicherheitselement nach wenigstens einem der Ansprüche 1 bis 5, **dadurch gekennzeichnet, dass** die auf der ersten Hauptfläche angeordnete optisch variable Struktur mit einer auf der zweiten Hauptfläche des Substrats angeordneten zweiten optisch variablen Struktur kombiniert ist, die eine zweite Prägestruktur und eine zweite Beschichtung aufweist, wobei

- die zweite Prägestruktur deckungsgleich, aber invers zur ersten Prägestruktur der ersten Hauptfläche ausgebildet ist,
- die zweite Beschichtung zumindest ein aufgedrucktes Linienraster umfasst,
- die zweite Beschichtung und die zweite Prägestruktur so kombiniert sind, dass im Wesentlichen auf jedem Prägeelement der zweiten Prägestruktur zumindest ein Liniensegment einer Linie des Linienrasters der zweiten Beschichtung liegt, und
- für das Linienraster der zweiten Beschichtung zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster der zweiten Beschichtung beim Kippen des Sicherheitselements ein Bewegungseffekt, insbesondere ein Pump- oder Rotationseffekt entsteht.

**7.** Sicherheitselement nach Anspruch 6, **dadurch gekennzeichnet, dass** die zweite Beschichtung eine zu dem Linienraster kontrastierende zweite Hintergrundschicht, insbesondere eine hochreflektierende zweite Hintergrundschicht umfasst.

**8.** Sicherheitselement nach wenigstens einem der Ansprüche 1 bis 7, **dadurch gekennzeichnet, dass** die kontrastierende Hintergrundschicht mit punkt- oder linienförmigen Aussparungen perforiert oder großflächig ausgespart ist.

**9.** Sicherheitselement nach wenigstens einem der Ansprüche 1 bis 8, **dadurch gekennzeichnet, dass** die Prägeelemente durch erhabene oder vertiefte Rundstrukturen, insbesondere durch gestauchte halbkugelförmige oder asphärische Strukturen oder Kalotten mit kreisförmiger oder polygonaler, insbesondere quadratischer Grundfläche gebildet sind.

**10.** Sicherheitselement nach wenigstens einem der Ansprüche 1 bis 9, **dadurch gekennzeichnet, dass** die Prägestruktur sowohl erhabene als auch vertiefte Prägeelemente enthält, und die erhabenen und vertieften Prägeelemente in Form eine Musters, von Zeichen oder einer Codierung angeordnet sind.

**11.** Sicherheitselement nach wenigstens einem der Ansprüche 1 bis 10, **dadurch gekennzeichnet, dass** die Prägestruktur neben dem genannten zweidimensionalen Raster zumindest einen Teilbereich mit langgestreckten erhabenen oder vertieften Prägeelementen umfasst, und/oder dass die Prägestruktur neben dem genannten zweidimensionalen Raster von Prägeelementen zumindest einen Teilbereich mit gegen das Raster versetzten Prägeelementen umfasst.

**12.** Sicherheitselement nach wenigstens einem der Ansprüche 1 bis 9, **dadurch gekennzeichnet, dass** das zweidimensionale Raster von Prägeelementen ein regelmäßiges zweidimensionales Raster, insbesondere ein regelmäßiges zweidimensionales Raster erhabener oder vertiefter Prägeelemente ist.

13. Sicherheitselement nach wenigstens einem der Ansprüche 1 bis 12, **dadurch gekennzeichnet, dass** das Linienraster eine Vielzahl sich nicht schneidender, vorzugsweise fast, aber nicht vollständig paralleler Linien enthält.

14. Sicherheitselement nach wenigstens einem der Ansprüche 1 bis 13, **dadurch gekennzeichnet, dass** die Position eines Liniensegments auf einem Prägeelement jeweils durch eine Phasenfunktion $\phi(x,y)$ gegeben ist, die von der Position (x,y) des Prägeelements in der optisch variablen Struktur abhängt und deren Funktionswert die relative Position des Liniensegments auf dem Prägeelement senkrecht zur Längenausdehnung des Liniensegments, normiert auf das Einheitsintervall [0, 1], angibt, und wobei die Phasenfunktion $\phi(x,y)$ ortsabhängig so variiert, dass beim Kippen des Sicherheitselements ein Bewegungseffekt, insbesondere ein Pump- oder Rotationseffekt entsteht, insbesondere dass die Phasenfunktion $\phi(x,y)$ direkt, insbesondere linear vom Winkel zwischen der Position (x,y) des Prägeelements und einem festen Bezugspunkt $(x_0, y_0)$ in der optisch variablen Struktur abhängt, so dass beim Kippen des Sicherheitselements ein Rotationseffekt um den Bezugspunkt $(x_0, y_0)$ entsteht, wobei die Phasenfunktion bevorzugt durch

$$\phi(x,y) = mod((\alpha + k^*arg((x-x_0)+i(y-y_0))/(2\pi), 1)$$

mit einer ganzen Zahl $k \neq 0$ und einem Offsetwinkel $\alpha$ gegeben ist.

15. Sicherheitselement nach wenigstens einem der Ansprüche 1 bis 14, **dadurch gekennzeichnet, dass** das Linienraster eine mittlere Rasterweite $W_L$ aufweist und die Prägeelemente in einem Raster angeordnet sind, dessen Rasterweite senkrecht oder unter 60° zum Linienraster eine Rasterweite $W_P$ aufweist, die im Wesentlichen gleich der mittleren Rasterweite $W_L$ ist.

16. Sicherheitselement nach wenigstens einem der Ansprüche 1 bis 15, **dadurch gekennzeichnet, dass** die Beschichtung zwei oder mehr Linienraster umfasst, wobei die Parameter 'Position des Liniensegments auf dem Prägeelement', 'Orientierung des Liniensegments auf dem Prägeelement' und 'Form des Liniensegments' für die Liniensegmente jedes Linienrasters unabhängig voneinander variieren, insbesondere dass die Linienraster unterschiedliche Bewegungseffekte oder gleiche Bewegungseffekte in gleiche oder unterschiedliche Richtungen erzeugen.

17. Sicherheitselement nach Anspruch 16, **dadurch gekennzeichnet, dass** die Linien unterschiedlicher Linienraster mit unterschiedlichen Farben aufgebracht sind.

18. Sicherheitselement nach wenigstens einem der Ansprüche 16 bis 17, **dadurch gekennzeichnet, dass** die Linienraster eine durch die Linienrichtung definierte Vorzugsrichtung aufweisen und die Vorzugsrichtungen der zwei oder mehr Linienraster einen Winkel von 60° oder 90° miteinander einschließen und/ oder dass die zwei oder mehr Linienraster einen Winkel von 0° miteinander einschließen und in einem Abstand parallel zueinander vorliegen.

19. Sicherheitselement nach wenigstens einem der Ansprüche 1 bis 18, **dadurch gekennzeichnet, dass** die Beschichtung mehrere Teilbereiche aufweist, in denen die Linienraster jeweils unterschiedliche Bewegungseffekte erzeugen.

20. Sicherheitselement nach wenigstens einem der Ansprüche 1 bis 19, **dadurch gekennzeichnet, dass** das Sicherheitselement einen Teilbereich in Form von Mustern, Zeichen oder einer Codierung aufweist, der beim Kippen des Sicherheitselements statisch bleibt, insbesondere dass das oder die Linienraster in dem Teilbereich ausgespart sind, so dass in dem Teilbereich keine Liniensegmente auf den Prägeelementen vorliegen und der Teilbereich beim Kippen des Sicherheitselements statisch bleibt.

21. Sicherheitselement nach Anspruch 20, **dadurch gekennzeichnet, dass** in dem Teilbereich vollflächig eine Druckfarbe aufgebracht ist.

22. Sicherheitselement nach wenigstens einem der Ansprüche 1 bis 21, **dadurch gekennzeichnet, dass** die Prägestruktur mit einer transparenten Deckschicht versehen ist, die die Prägeelemente einebnet.

23. Datenträger mit einem Sicherheitselement nach wenigstens einem der Ansprüche 1 bis 22.

24. Datenträger nach Anspruch 23, **dadurch gekennzeichnet, dass** der Datenträger ein Folienelement aufweist, das durch das Sicherheitselement abgesichert ist, indem sich das Sicherheitselement über zumindest einen ' Teilbereich des Folienelements und zumindest einen an das Folienelement angrenzenden Bereich des Datenträgers erstreckt.

25. Verfahren zum Herstellen eines optisch variablen Sicherheitselements nach einem der Ansprüche 1 bis 22, bei dem

- ein Substrat mit gegenüberliegenden ersten und zweiten Hauptflächen bereitgestellt wird,
- eine Beschichtung der ersten Hauptfläche erzeugt wird, indem zumindest ein Linienraster und eine zu dem Linienraster kontrastierende Hintergrundschicht auf die erste Hauptfläche des Substrats aufgebracht werden, wobei die kontrastierende Hintergrundschicht durch eine hochreflektierende Hintergrundschicht oder eine glänzende Hintergrundschicht gebildet wird, und
- in einem Prägeschritt eine Prägestruktur auf der ersten Hauptfläche erzeugt wird, indem ein zweidimensionales Raster erhabener und/oder vertiefter Prägeelemente auf der ersten Hauptfläche ausgebildet wird,
- wobei die Beschichtung und die Prägestruktur so kombiniert werden, dass im Wesentlichen auf jedem Prägeelement zumindest ein Liniensegment einer Linie des Linienrasters liegt, und zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster beim Kippen des Sicherheitselements ein Bewegungseffekt, insbesondere ein Pump- oder Rotationseffekt entsteht.

26. Verfahren nach Anspruch 25, **dadurch gekennzeichnet, dass** die kontrastierende Hintergrundschicht vorzugsweise vollflächig auf die erste Hauptfläche aufgebracht wird, und das Linienraster auf die kontrastierende Hintergrundschicht aufgedruckt wird, oder dass das Linienraster auf die erste Hauptfläche aufgedruckt wird, die kontrastierende Hintergrundschicht vorzugsweise vollflächig über dem Linienraster aufgebracht wird und nachfolgend das Linienraster durch bereichsweise Entfernung der Hintergrundschicht freigelegt wird.

27. Verfahren nach wenigstens einem der Ansprüche 25 bis 26, **dadurch gekennzeichnet, dass** die Prägestruktur der ersten Hauptfläche durch eine Blindprägung erzeugt wird.

28. Verfahren nach wenigstens einem der Ansprüche 25 bis 27, **dadurch gekennzeichnet, dass**

- eine zweite Beschichtung auf der zweiten Hauptfläche erzeugt wird, indem zumindest ein zweites Linienraster auf die zweite Hauptfläche des Substrats aufgebracht wird,
- in dem Prägeschritt zusammen mit der Prägestruktur auf der ersten Hauptfläche gleichzeitig eine deckungsgleiche Prägestruktur mit inverser Geometrie auf der zweiten Hauptfläche ausgebildet wird,
- wobei die zweite Beschichtung und die zweite Prägestruktur so kombiniert werden, dass im Wesentlichen auf jedem Prägeelement zumindest ein Liniensegment einer Linie des Linienrasters der zweiten Beschichtung liegt, und für das Linienraster der zweiten Beschichtung zumindest einer der Parameter 'Position des Liniensegments auf dem Prägeelement', 'Orientierung des Liniensegments auf dem Prägeelement' und 'Form des Liniensegments' über die Ausdehnung der optisch variablen Struktur ortsabhängig variiert, so dass durch das Linienraster der zweiten Beschichtung beim Kippen des Sicherheitselements ein Bewegungseffekt, insbesondere ein Pump- oder Rotationseffekt entsteht.

29. Verfahren nach Anspruch 28, **dadurch gekennzeichnet, dass** das zumindest eine Linienraster der ersten Beschichtung und das zumindest eine Linienraster der zweiten Beschichtung im Simultanverfahren auf die erste und zweite Hauptfläche aufgebracht werden.

**Claims**

1. An optically variable security element (12) for securing valuable articles (10), having a substrate (28) having opposing first and second main surfaces and, arranged on the first main surface, an optically variable pattern (20) that comprises an embossing pattern (22) and a coating (24), wherein

- the coating comprises at least one imprinted line grid (30) and one background layer (26) that contrasts with the line grid, wherein the contrasting background layer is formed by a highly reflective background layer or a glossy background layer,
- the embossing pattern comprises a two-dimensional grid of elevated and/or depressed embossing elements (34),
- the coating and the embossing pattern are combined in such a way that substantially on every embossing element lies at least one line segment (36) of a line (32) in the line grid, and
- at least one of the parameters 'position of the line segment on the embossing element', 'orientation of the line segment on the embossing element' and 'form of the line segment' varies location dependently across the dimension of the optically variable pattern such that, due to the line grid, a movement effect, especially a pump or rotation effect, is created when the security element is tilted.

2. The security element according to claim 1, **characterized in that** the contrasting background layer is formed by a glossy silver, gold- or copper-colored foil or a silver-, gold- or copper-colored printing layer.

3. The security element according to claim 1, **characterized in that** the contrasting background layer is formed by a glossy background layer and that the line grid on the contrasting background layer is developed having a high areal density.

4. The security element according to at least one of claims 1 to 3, **characterized in that** the substrate is transparent or translucent, at least in the region of the optically variable pattern arranged on the first main surface.

5. The security element according to claim 4, **characterized in that** the coating comprises at least one further line grid that is arranged below the background layer and that contrasts with the background layer,

- substantially on each embossing element lying at least one line segment of a line in the further line grid, and
- for the further line grid, at least one of the parameters 'position of the line segment on the embossing element', 'orientation of the line segment on the embossing element' and 'form of the line segment' varying location dependently across the dimension of the optically variable pattern such that, due to the further line grid, a movement effect, especially a pump or rotation effect, is created when the security element is tilted.

6. The security element according to at least one of claims 1 to 5, **characterized in that** the optically variable pattern arranged on the first main surface is combined with, arranged on the second main surface of the substrate, a second optically variable pattern that comprises a second embossing pattern and a second coating,

- the second embossing pattern being developed to be congruent but inverse to the first embossing pattern of the first main surface,
- the second coating comprising at least one imprinted line grid,
- the second coating and the second embossing pattern being combined in such a way that substantially on every embossing element of the second embossing pattern lies at least one line segment of a line in the line grid of the second coating, and
- for the line grid of the second coating, at least one of the parameters 'position of the line segment on the embossing element', 'orientation of the line segment on the embossing element' and 'form of the line segment' varying location dependently across the dimension of the optically variable pattern such that, due to the line grid of the second coating, a movement effect, especially a pump or rotation effect, is created when the security element is tilted.

7. The security element according to claim 6, **characterized in that** the second coating comprises a second background layer, especially a highly reflective second background layer, that contrasts with the line grid.

8. The security element according to at least one of claims 1 to 7, **characterized in that** the contrasting background layer is perforated with point- or line-shaped gaps or is omitted in large areas.

9. The security element according to at least one of claims 1 to 8, **characterized in that** the embossing elements are formed by elevated or depressed round structures, especially by compressed hemispherical or aspherical structures or calottes having a circular or polygonal, especially quadratic, base area.

10. The security element according to at least one of claims 1 to 9, **characterized in that** the embossing pattern includes both elevated and depressed embossing elements, and the elevated and depressed embossing elements are arranged in the form of a pattern, characters or a code.

11. The security element according to at least one of claims 1 to 10, **characterized in that** the embossing pattern comprises, besides the two-dimensional grid mentioned, at least one sub-region having elongated elevated or depressed embossing elements, and/or that the embossing pattern comprises, besides the two-dimensional grid of embossing elements mentioned, at least one sub-region having embossing elements offset against the grid.

12. The security element according to at least one of claims 1 to 9, **characterized in that** the two-dimensional grid of embossing elements is a regular two-dimensional grid, especially a regular two-dimensional grid of elevated or depressed embossing elements.

13. The security element according to at least one of claims 1 to 12, **characterized in that** the line grid includes a plurality of non-intersecting, preferably almost, but not completely, parallel lines.

14. The security element according to at least one of claims 1 to 13, **characterized in that** the position of a line segment on an embossing element is given in each case by a phase function $\phi(x,y)$ that depends on the position (x,y) of the embossing element in the optically variable pattern and whose function value specifies the relative position of the line segment on the embossing element perpendicular to the length dimension of the line segment, normalized to the unit interval [0, 1], and the phase function $\phi(x,y)$ varying location dependently in such a way that a movement effect, especially a pump or rotation effect, is created when the security element is tilted, especially that the phase function $\phi(x,y)$ depends directly, especially linearly, on the angle between the position (x,y) of the embossing element and a fixed reference point $(x_0, y_0)$ in the optically variable pattern such that, when the security element is tilted, a rotation effect about the reference point (xo, yo) is created, the phase function preferably being given by

$$\phi(x,y) = \mathrm{mod}((\alpha + k*\arg((x-x_0)+i(y-y_0))/(2\pi), 1)$$

with an integer $k \neq 0$ and an offset angle $\alpha$.

15. The security element according to at least one of claims 1 to 14, **characterized in that** the line grid has an average line screen WL and the embossing elements are arranged in a grid whose line screen has, perpendicular or at 60° to the line grid, a line screen $W_P$ that is substantially equal to the average line screen $W_L$.

16. The security element according to at least one of claims 1 to 15, **characterized in that** the coating comprises two or more line grids, the parameters 'position of the line segment on the embossing element', 'orientation of the line segment on the embossing element' and 'form of the line segment' varying independently of each other for the line segments of each line grid, especially that the line grids produce different movement effects or identical movement effects in identical or different directions.

17. The security element according to claim 16, **characterized in that** the lines of different line grids are applied with different colors.

18. The security element according to at least one of claims 16 to 17, **characterized in that** the line grids have a preferred direction defined by the line direction, and the preferred directions of the two or more line grids together include an angle of 60° or 90° and/or **in that** the two or more line grids together include an angle of 0° and are present parallel to each other at a distance.

19. The security element according to at least one of claims 1 to 18, **characterized in that** the coating comprises multiple sub-regions in which the line grids each produce different movement effects.

20. The security element according to at least one of claims 1 to 19, **characterized in that** the security element comprises, in the form of patterns, characters or a code, a sub-region that remains static when the security element is tilted, especially that the line grid(s) in the sub-region are omitted such that, in the sub-region, no line segments are present on the embossing elements and the sub-region remains static when the security element is tilted.

21. The security element according to claim 20, **characterized in that** a printing ink is applied contiguously in the sub-region.

22. The security element according to at least one of claims 1 to 21, **characterized in that** the embossing pattern is provided with a transparent cover layer that levels the embossing elements.

23. A data carrier having a security element according to at least one of claims 1 to 22.

24. The data carrier according to claim 23, **characterized in that** the data carrier comprises a foil element that is secured by the security element **in that** the security element extends across at least one sub-region of the foil element and at least one data carrier region adjoining the foil element.

25. A method for manufacturing an optically variable security element according to one of claims 1 to 22, in which

- a substrate having opposing first and second main surfaces is provided,
- a coating of the first main surface is produced in that at least one line grid and one background layer that contrasts with the line grid are applied to the first main surface of the substrate, wherein the contrasting background layer is formed by a highly reflective background layer or a glossy background layer, and
- in an embossing step, an embossing pattern is produced on the first main surface in that a two-dimensional grid of elevated and/or depressed embossing elements is developed on the first main surface,
- the coating and the embossing pattern being combined in such a way that substantially on every embossing element lies at least one line segment of a line in the line grid, and at least one of the parameters 'position of the line segment on the embossing element', 'orientation of the line segment on the embossing element' and 'form of the line segment' varying location dependently across the dimension of the optically variable pattern such that, due to the line grid, a movement effect, especially a pump or rotation effect, is created when the security element is tilted.

26. The method according to claim 25, **characterized in that** the contrasting background layer is preferably applied contiguously to the first main surface, and the line grid is imprinted on the contrasting background layer, or that the line grid is imprinted on the first main surface, the contrasting background layer is preferably applied contiguously over the line grid and, subsequently, the line grid is exposed through removal of the background layer in some regions.

27. The method according to at least one of claims 25 to 26, **characterized in that** the embossing pattern of the first main surface is produced by a blind embossing.

28. The method according to at least one of claims 25 to 27, **characterized in that**

- a second coating is produced on the second main surface **in that** at least one second line grid is applied to the second main surface of the substrate,
- in the embossing step, together with the embossing pattern on the first main surface, simultaneously, a congruent embossing pattern having the inverse geometry is developed on the second main surface,
- the second coating and the second embossing pattern being combined in such a way that substantially on every embossing element lies at least one line segment of a line in the line grid of the second coating, and for the line grid of the second coating, at least one of the parameters 'position of the line segment on the embossing element', 'orientation of the line segment on the embossing element' and 'form of the line segment' varies location dependently across the dimension of the optically variable pattern such that, due to the line grid of the second coating, a movement effect, especially a pump or rotation effect, is created when the security element is tilted.

29. The method according to claim 28, **characterized in that** the at least one line grid of the first coating and the at least one line grid of the second coating are applied to the first and second main surface in a simultaneous process.

## Revendications

1. Elément de sécurité optiquement variable (12) pour sécuriser des objets de valeur (10), avec un substrat (28) avec des premières et deuxièmes surfaces principales opposées et une structure (20) optiquement variable disposée sur la première surface principale, qui comporte une structure de gaufrage (22) et un revêtement (24), sachant que

- le revêtement comprend au moins une trame linéaire empreinte (30) et une couche de fond (26) contrastante par rapport à la trame linéaire, sachant que la couche de fond contrastante est formée par une couche de fond hautement réfléchissante ou une couche de fond brillante,
- la structure de gaufrage comprend une trame bidimensionnelle d'éléments de gaufrage en relief et/ou en creux (34),
- le revêtement et la structure de gaufrage sont combinés de telle manière qu'au moins un segment linéaire (36) d'une ligne (32) de la trame linéaire se situe pour l'essentiel sur chaque élément de gaufrage, et
- au moins un des paramètres 'Position du segment linéaire sur l'élément de gaufrage', 'Orientation du segment linéaire sur l'élément de gaufrage' et 'Forme du segment linéaire' varie en fonction du lieu par le biais de l'extension de la structure optiquement variable de telle sorte qu'un effet de mouvement, notamment un effet de pompage ou de rotation, se crée par la trame linéaire en faisant basculer l'élément de sécurité.

2. Elément de sécurité selon la revendication 1, **caractérisé en ce que** la couche de fond contrastante est formée par une feuille brillante argentée, dorée ou cuivrée ou une couche d'impression argentée, dorée ou cuivrée.

3. Elément de sécurité selon la revendication 1, **caractérisé en ce que** la couche de fond contrastante est formée par une couche de fond brillante et la trame linéaire sur la couche de fond contrastante est constituée avec une densité superficielle élevée.

4. Elément de sécurité selon au moins l'une quelconque des revendications 1 à 3, **caractérisé en ce que** le substrat est transparent ou translucide au moins dans la zone de la structure optiquement variable disposée sur la première surface principale.

5. Elément de sécurité selon la revendication 4, **caractérisé en ce que** le revêtement comprend au moins une autre trame linéaire disposée en dessous de la couche de fond et contrastante par rapport à la couche de fond, sachant que

- au moins un segment linéaire d'une ligne de l'autre trame linéaire se situe pour l'essentiel sur chaque élément de gaufrage, et
- pour l'autre trame linéaire au moins un des paramètres 'Position du segment linéaire sur l'élément de gaufrage', 'Orientation du segment linéaire sur l'élément de gaufrage' et 'Forme du segment linéaire' varie en fonction du lieu par le biais de l'extension de la structure optiquement variable de telle sorte qu'un effet de mouvement, notamment un effet de pompage ou de rotation, se crée par l'autre trame linéaire en faisant basculer l'élément de sécurité.

6. Elément de sécurité selon au moins l'une quelconque des revendications 1 à 5, **caractérisé en ce que** la structure optiquement variable disposée sur la première surface principale est combinée avec une deuxième structure optiquement variable disposée sur la deuxième surface principale du substrat, sachant que

- la deuxième structure de gaufrage est constituée de même couverture, mais inversement à la première structure de gaufrage de la première surface principale,
- le deuxième revêtement comprenant au moins une trame linéaire imprimée,
- le deuxième revêtement et la deuxième structure de gaufrage sont combinés de telle manière qu'au moins un segment linéaire d'une ligne de la trame linéaire du deuxième revêtement se situe pour l'essentiel sur chaque segment de gaufrage de la deuxième structure de gaufrage, et
- pour la trame linéaire du deuxième revêtement, au moins un des paramètres 'Position du segment linéaire sur l'élément de gaufrage', 'Orientation du segment linéaire sur l'élément de gaufrage' et 'Forme du segment linéaire' varie en fonction du lieu par le biais de l'extension de la structure optiquement variable de telle sorte qu'un effet de mouvement, notamment un effet de pompage ou de rotation, se crée par la trame linéaire du deuxième revêtement en faisant basculer l'élément de sécurité.

7. Elément de sécurité selon la revendication 6, **caractérisé en ce que** le deuxième revêtement comprend une deuxième couche de fond contrastante par rapport à la trame linéaire, notamment une deuxième couche de fond hautement réfléchissante.

8. Elément de sécurité selon au moins l'une quelconque des revendications 1 à 7, **caractérisé en ce que** la couche de fond contrastante est perforée ou évidée sur une grande surface avec des évidements ponctuels ou linéaires.

9. Elément de sécurité selon au moins l'une quelconque des revendications 1 à 8, **caractérisé en ce que** les éléments de gaufrage sont formés par des structures rondes en relief ou en creux, notamment par des structures ou des calottes refoulées hémisphériques ou asphériques avec une surface de base circulaire ou polygonale, notamment quadratique.

10. Elément de sécurité selon au moins l'une quelconque des revendications 1 à 9, **caractérisé en ce que** la structure de gaufrage contient aussi bien des éléments de gaufrage en relief qu'en creux et les éléments de gaufrage en relief et en creux sont disposés sous la forme d'un motif, de signes ou d'une codification.

**11.** Elément de sécurité selon au moins l'une quelconque des revendications 1 à 10, **caractérisé en ce que** la structure de gaufrage comprend en plus de la trame bidimensionnelle citée au moins une partie de zone avec des éléments de gaufrage en relief ou en creux allongés et/ou **en ce que** la structure de gaufrage comprend en plus de la trame bidimensionnelle citée d'éléments de gaufrage au moins une partie de zone avec des éléments de gaufrage décalés par rapport à la trame.

**12.** Elément de sécurité selon au moins l'une quelconque des revendications 1 à 9, **caractérisé en ce que** la trame bidimensionnelle des éléments de gaufrage est une trame régulière bidimensionnelle, notamment une trame régulière bidimensionnelle des éléments de gaufrage en relief ou en creux.

**13.** Elément de sécurité selon au moins l'une quelconque des revendications 1 à 12, **caractérisé en ce que** la trame linéaire contient une pluralité de lignes ne se croisant pas, de préférence presque mais pas complètement parallèles.

**14.** Elément de sécurité selon au moins l'une quelconque des revendications 1 à 13, **caractérisé en ce que** la position d'un segment linéaire est donnée sur un élément de gaufrage respectivement par une fonction de phase $\phi(x, y)$, qui dépend de la position $(x, y)$ de l'élément de gaufrage dans la structure optiquement variable et dont la valeur de fonction, normalisée sur l'intervalle d'unité $[0, 1]$, indique la position relative du segment linéaire sur l'élément de gaufrage perpendiculairement à l'extension longitudinale du segment linéaire et sachant que la fonction de phase $\phi(x, y)$ varie en fonction du lieu de telle sorte qu'en faisant basculer l'élément de sécurité, il se crée un effet de mouvement, notamment un effet de pompage ou de rotation, notamment **en ce que** la fonction de phase $\phi(x, y)$ dépend directement, notamment linéairement, de l'angle situé entre la position $(x, y)$ de l'élément de gaufrage et d'un point de référence fixe $(x_0, y_0)$ dans la structure optiquement variable de telle manière qu'en faisant basculer l'élément de sécurité, il se crée un effet de rotation autour du point de référence $(x_0, y_0)$, sachant que la fonction de phase est donnée de préférence par

$$\phi(x,y)=\mod((\alpha+k*\arg((x-x_0)+i(y-y_0))/2\Pi),1)$$

avec un nombre entier $k \neq 0$ et un angle de déport $\alpha$.

**15.** Elément de sécurité selon au moins l'une quelconque des revendications 1 à 14, **caractérisé en ce que** la trame linéaire comporte une largeur de trame moyenne $W_L$ et les éléments de gaufrage sont disposés dans une trame, dont la largeur de trame comporte une largeur de trame $W_P$ perpendiculairement ou à 60° par rapport à la trame linéaire, qui est pour l'essentiel égale à la largeur de trame moyenne $W_L$.

**16.** Elément de sécurité selon au moins l'une quelconque des revendications 1 à 15, **caractérisé en ce que** le revêtement comprend deux ou plusieurs trames linéaires, sachant que les paramètres 'Position du segment linéaire sur l'élément de gaufrage', 'Orientation du segment linéaire sur l'élément de gaufrage' et 'Forme du segment linéaire' pour les segments linéaires de chaque trame linéaire varient indépendamment l'un de l'autre, notamment **en ce que** les trames linéaires produisent des effets de mouvement différents ou des effets de mouvement identiques dans des directions identiques ou différentes.

**17.** Elément de sécurité selon la revendication 16, **caractérisé en ce que** les lignes de trames linéaires différentes sont appliquées avec des encres différentes.

**18.** Elément de sécurité selon au moins l'une quelconque des revendications 16 à 17, **caractérisé en ce que** les trames linéaires comportent une direction de préférence définie par la direction linéaire et les directions de préférence des deux ou plusieurs trames linéaires forment ensemble un angle de 60° ou 90° et/ou **en ce que** les deux ou plusieurs trames linéaires forment ensemble un angle de 0° et se présentent parallèlement à distance l'une à l'autre.

**19.** Elément de sécurité selon au moins l'une quelconque des revendications 1 à 18, **caractérisé en ce que** le revêtement comporte plusieurs parties de zone dans lesquelles les trames linéaires produisent respectivement des effets de mouvement différents.

**20.** Elément de sécurité selon au moins l'une quelconque des revendications 1 à 19, **caractérisé en ce que** l'élément de sécurité comporte une partie de zone sous la forme d'un motif, de signes ou d'une codification qui reste statique en faisant basculer l'élément de sécurité, notamment **en ce que** la ou les trame(s) linéaire(s) est/sont évidée(s) dans la partie de zone de telle sorte que dans la partie de zone il n'y a aucun segment linéaire sur les éléments de gaufrage et la partie de zone reste statique en faisant basculer l'élément de sécurité.

21. Elément de sécurité selon la revendication 20, **caractérisé en ce qu'**une encre d'impression est appliquée sur toute la surface dans la partie de zone.

22. Elément de sécurité selon au moins l'une quelconque des revendications 1 à 21, **caractérisé en ce que** la structure de gaufrage est dotée d'une couche de couverture transparente, qui nivelle les éléments de gaufrage.

23. Support de données avec un élément de sécurité selon au moins l'une quelconque des revendications 1 à 22.

24. Support de données selon la revendication 23, **caractérisé en ce que** le support de données comporte un élément en feuille, qui est sécurisé par l'élément de sécurité, l'élément de sécurité s'étendant sur au moins une partie de zone de l'élément en feuille et au moins une zone du support de données délimitant l'élément en feuille.

25. Procédé de fabrication d'un élément de sécurité optiquement variable selon l'une quelconque des revendications 1 à 22, pour lequel

- un substrat avec une première et une deuxième surface principale opposées est fourni,
- un revêtement de la première surface principale est produit, au moins une trame linéaire et une couche de fond contrastante par rapport à la trame linéaire étant appliquées sur la première surface principale du substrat, sachant que la couche de fond contrastante est formée par une couche de fond hautement réfléchissante ou une couche de fond brillante, et
- une structure de gaufrage est produite sur la première surface principale dans une étape de gaufrage, une trame bidimensionnelle d'éléments en relief et/ou en creux étant constituée sur la première surface principale,
- sachant que le revêtement et la structure de gaufrage sont combinés de telle manière qu'au moins un segment linéaire d'une ligne de la trame linéaire se situe pour l'essentiel sur chaque élément de gaufrage et au moins un des paramètres 'Position du segment linéaire sur l'élément de gaufrage', 'Orientation du segment linéaire sur l'élément de gaufrage' et 'Forme du segment linéaire' varie en fonction du lieu par le biais de l'extension de la structure optiquement variable, de telle manière qu'un effet de mouvement, notamment un effet de pompage ou de rotation se crée par la trame linéaire en faisant basculer l'élément de sécurité.

26. Procédé selon la revendication 25, **caractérisé en ce que** la couche de fond contrastante est appliquée de préférence sur toute la surface de la première surface principale et la trame linéaire est empreinte sur la couche de fond contrastante ou **en ce que** la trame linéaire est empreinte sur la première surface principale, la couche de fond contrastante est appliquée de préférence sur toute la trame linéaire et la trame linéaire est ensuite libérée par enlèvement par endroits de la couche de fond.

27. Procédé selon au moins l'une quelconque des revendications 25 à 26, **caractérisé en ce que** la structure de gaufrage de la première surface principale est produite par un gaufrage à sec.

28. Procédé selon au moins l'une quelconque des revendications 25 à 27, **caractérisé en ce**

- **qu'**un deuxième revêtement est produit sur la deuxième surface principale, au moins une deuxième trame linéaire étant appliquée sur la deuxième surface principale du substrat,
- **qu'**une structure de gaufrage de même couverture avec géométrie inversée est constituée sur la deuxième surface principale dans la phase de gaufrage conjointement à la structure de gaufrage sur la première surface principale,
- sachant que le deuxième revêtement et la deuxième structure de gaufrage sont combinés de telle sorte qu'au moins un segment linéaire d'une ligne de la trame linéaire du deuxième revêtement se situe pour l'essentiel sur chaque élément de gaufrage et pour la trame linéaire du deuxième revêtement au moins un des paramètres 'Position du segment linéaire sur l'élément de gaufrage', 'Orientation du segment linéaire sur l'élément de gaufrage' et 'Forme du segment linéaire' varie en fonction du lieu par le biais de l'extension de la structure optiquement variable, de telle manière qu'un effet de mouvement, notamment un effet de pompage ou de rotation se crée par la trame linéaire du deuxième revêtement en faisant basculer l'élément de sécurité.

29. Procédé selon la revendication 28, **caractérisé en ce qu'**au moins une trame linéaire du premier revêtement et au moins une trame linéaire du deuxième revêtement sont appliquées dans un procédé simultané sur la première et la deuxième surface principale.

10

18  14

12

16

50

Fig. 1

12

B →    W_P

W_L

34
32
32  30
32

W_P

32

b

B →    36

Fig. 2a

40      42      44      20

12   24 { 30 {   36    36    36    36
        26                              34  } 22

28

Fig. 2b

Fig. 3a

Fig. 3b

Fig. 3c

Fig. 3d

Fig. 4

Fig. 5

Fig. 6a

Fig. 6b

Fig. 7

Fig. 8

Fig. 9

Fig. 10

Fig. 11

Fig. 12

Fig. 13

154

156

26
94
92

158

Fig. 14

160    164    24    72    74    20
              26                        }22
162

166    170    172    174    }182
       176           180

Fig. 15

26'

162

176'

Fig. 16

Fig. 17

Fig. 18

212 { 214 216 218

210

30

Fig. 19

220

226 222

228

224 224

50

Fig. 20

230

234

232

Fig. 21

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2562726 A2

- DE 102013000152